# EUROPÄISCHE PATENTSCHRIFT

(11) **EP 3 729 010 B1**
(45) Veröffentlichungstag und Bekanntmachung des Hinweises auf die Patenterteilung: **22.05.2024**
(21) Anmeldenummer: 18803960.6
(22) Anmeldetag: 15.11.2018
(51) Int. Cl.: G01F 1/84, G01N 9/00, G01N 11/16, G01F 15/14

(54) **MESSWANDLER VOM VIBRATIONSTYP SOWIE DAMIT GEBILDETES VIBRONISCHES MESSSYSTEM**
VIBRATION-TYPE MEASURING TRANSDUCER AND VIBRONIC MEASURING SYSTEM FORMED THEREWITH
TRANSDUCTEUR DE TYPE À VIBRATION ET SYSTÈME DE MESURE VIBRATOIRE ASSOCIÉ

(30) Priorität: 22.12.2017 DE 102017131187
(43) Veröffentlichungstag der Anmeldung: 28.10.2020
(73) Patentinhaber: Endress + Hauser Flowtec AG, 4153 Reinach (CH)
(72) Erfinder: ZHU, Hao, 85354 Freising (DE); RIEDER, Alfred, 84032 Landshut (DE); BITTO, Ennio, 4147 Aesch (CH); ECKERT, Gerhard, 79639 Grenzach-Wyhlen (DE)
(74) Vertreter: Hahn, Christian
(86) Internationale Anmeldenummer: PCT/EP2018/081298
(87) Internationale Veröffentlichungsnummer: WO 2019/120780

(56) Entgegenhaltungen:
- US-A1- 2011 167 907
- US-A1- 2013 283 932
- US-A1- 2017 261 474
- Klein: "12.5 allgemeintoleranzen" In: "Einführung in die DIN-Normen", 1 January 1993 (1993-01-01), XP055452202, pages 286-290,

## Beschreibung

Die Erfindung betrifft einen, insb. für ein dem Messen wenigstens einer Meßgröße eines strömenden Fluids dienliches vibronisches Meßsystem geeigneten, Meßwandler mit einer mittels vier lediglich paarweise baugleichen gekrümmten Rohren sowie zwei jeweils vier Strömungsöffnungen aufweisenden Strömungsteilern gebildeten Rohranordnung sowie ein mittels eines solchen Meßwandlers gebildetes vibronisches Meßsystem zum Messen wenigstens einer Meßgröße, beispielsweise nämlich eines Strömungsparameters, wie einer Massendurchflußrate oder einer Volumendurchflußrate, oder eines Stoffparameters, wie einer Dichte oder einer Viskosität, eines strömenden Fluids. Zudem betrifft die Erfindung ein mit einem solchen Meßwandler gebildetes vibronisches Meßsystem.

In der industriellen Meßtechnik werden - insb. auch im Zusammenhang mit der Regelung und Überwachung von automatisierten verfahrenstechnischen Prozessen - zur hochgenauen Ermittlung einer Massendurchflußrate eines in einer Prozeßleitung, beispielsweise einer Rohrleitung, strömenden Mediums, beispielsweise einer Flüssigkeiten, eines Gases oder einer Dispersion, oftmals jeweils mittels einer - zumeist mittels wenigstens eines Mikroprozessors gebildeten - Umformerschaltung sowie einem mit nämlicher Umformerschaltung elektrisch verbundenen, im Betrieb vom zu messenden Medium durchströmten Meßwandler vom Vibrationstyp gebildete vibronische Meßsysteme, beispielsweise nämlich Coriolis-Massendurchfluß-Meßgeräte, verwendet. Meßwandler vom Vibrationstyp bzw. damit gebildete vibronische Meßsysteme sind beispielsweise in der US-A 2012/0192658, der US-A 2017/0261474 oder der WO-A 2016/107694 beschrieben. Die Rohranordnung eines solchen Meßwandlers weist demnach ein gekrümmtes erstes Rohr, ein nämlichem ersten Rohr baugleiches zweites Rohr, ein gekrümmtes drittes Rohr sowie ein lediglich nämlichem dritten Rohr baugleiches viertes Rohr auf. Darüberhinaus weist die vorbezeichnete Rohranordnung einen - beispielsweise im Betrieb als Leitungsverzweigung dienlichen - ersten Strömungsteiler mit - hier genau - vier Strömungsöffnungen und einen dazu baugleichen - beispielsweise im Betrieb als Leitungsvereinigung dienlichen - zweiten Strömungsteiler mit - hier ebenfalls genau - vier Strömungsöffnungen auf. Ein jedes der vorbezeichneten - hier genau - vier Rohre erstreckt sich jeweils von einem jeweiligen ersten Ende bis zu einem jeweiligen zweiten Ende mit einer jeweiligen - einer gestreckten Länge bzw. einer Länge von dessen jeweiliger Mittellinie entsprechenden - Rohrlänge und weist zudem jeweils ein von einer - typischerweise metallischen - Rohrwandung umschlossenes, sich jeweils vom jeweiligen ersten Ende des jeweiligen Rohrs bis zum jeweiligen zweiten Ende nämlichen Rohrs erstreckenden Lumen auf, wobei die Rohrwandung typischerweise monolithisch, mithin das damit gebildete Rohr typischerweise einstückig ausgebildet ist. Zudem weisen die zu einer der vorbezeichneten Rohranordnung gehörigen vier Rohre jeweils ein gleiches Kaliber (Innendurchmesser) auf und ist ein jedes der Rohre zwecks Bildung paralleler Strömungspfade jeweils an jeden der beiden Strömungsteiler angeschlossen, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden. Die Rohrwandung jedes der Rohre besteht typischerweise aus dem gleichen Material, wie z.B. einem Edelstahl oder einer Nickelbasislegierung.

Typischerweise weisen Meßwandler der in Rede, wie auch in der US-A 2012/0192658, der US-A 2017/0261474 oder der WO-A 2016/107694 jeweils offenbart, desweiteren ein dessen jeweilige Rohre umhüllendes Wandlergehäuse mit einer zumeist hermetisch geschlossenen Kavität, innerhalb der jedes Rohre angeordnet ist, auf. Jedes der Wandlergehäuse ist mittels eines zylindrischen, insb. nämlich röhrenförmigen bzw. zumindest abschnittsweise hohlzylindrischen, Tragelement sowie eines - beispielsweise kappenförmiges - Hüllelement gebildet. Das Tragelement erstreckt sich von einem ersten Ende bis zu einem zweiten Ende mit einer Tragelementlänge und ist an dessen ersten Ende mit dem ersten Strömungsteiler und mit an dessen zweiten Ende mit dem zweiten Strömungsteiler mechanisch, insb. stoffschlüssig, verbunden. Das Hüllelement wiederum ist mit dem Tragelement mechanisch, insb. stoffschlüssig, verbunden. Sowohl das Tragelement als auch das Hüllelement weisen jeweils einen von einer, typischerweise metallischen, Wandung umhüllten, jeweils einen Teilbereich der Kavität bildenden Hohlraum auf, derart, daß eine Wandung des Hüllelements zusammen mit einem Segment der Wandung des Trägerelements einen einen Teilbereich der Kavität bildenden Hohlraum umhüllen und daß nämliche Hohlräume miteinander kommunizieren bzw. ineinander übergehen. Dafür sind in der Wandung des Tragelements jeweils eine erste Öffnung sowie wenigstens eine von der ersten Öffnung entlang einer gedachten Mantellinie der Wandung beabstandete zweite Öffnung vorgesehen, derart, daß jede der ersten und zweiten Öffnungen jeweils einen Teilbereich der Kavität des Wandlergehäuses bildet und daß sich jedes der Rohre jeweils sowohl durch die erste Öffnung als auch durch die zweite Öffnung erstreckt.

Die Rohranordnung bzw. der damit gebildete Meßwandler ist dafür vorgesehen bzw. eingerichtet, in den Verlauf einer ein zu messendes Fluid - beispielsweise nämlich ein Gas, eine Flüssigkeit oder eine Dispersion - führenden als Rohrleitung ausgebildeten Prozeßleitung eingegliedert und im Betrieb von nämlichem Fluid durchströmt zu werden. Darüberhinaus ist jedes der vorbezeichneten Rohre jeweils dafür eingerichtet, in dessen jeweiligen Lumen das ggf. strömende Fluid zu führen und währenddessen, nicht zuletzt zwecks Bewirken von mit der wenigstens einen Meßgröße korrelierten Meßeffekten, um vibrieren gelassen zu werden, insb. derart, daß jedes der Rohre Nutzschwingungen, nämlich mechanische Schwingungen um eine jeweilige Ruhelage mit einer auch von der Dichte des Mediums mitbestimmten, mithin als Maß für die Dichte verwendbaren Nutzfrequenz ausführt. Bei herkömmlichen als Coriolis-Massendurchfluß-Meßgeräte ausgebildeten Meßsystemen dienen typischerweise Biegeschwingungen auf einer natürlichen Resonanzfrequenz als Nutzschwingungen, beispielsweise solche Biegeschwingungen, die einem dem Meßwandler immanenten natürlichen Biegeschwingungsgrundmode entsprechen, in dem die Schwingungen jedes der Meßrohre jeweils solche Resonanzschwingungen sind, die genau einen Schwingungsbauch aufweisen. Die Nutzschwingungen sind bei einem zumindest abschnittsweise gekrümmtem Rohr zudem typischerweise so ausgebildet, daß nämliches Rohr um eine zugehörige, ein einlaßseitiges und ein außlaßseitiges Ende des Rohrs imaginär verbindenden gedachte Schwingungsachse nach Art eines an einem Ende eingespannten Auslegers pendelt. Der Meßwandler kann zudem beispielsweise so in die Prozeßleitung eingegliedert sein, daß der erste Strömungsteiler der Rohranordnung einlaßseitig angeordnet ist, mithin als eine Leitungsverzweigung dient, und daß der zweite Strömungsteiler der Rohranordnung auslaßseitig angeordnete ist, mithin als eine Leitungsvereinigung dient und daß jedes der Rohre der Rohranordnung in einer gemeinsamen Strömungsrichtung, nämlich ausgehend von dessen jeweiligen ersten Ende in Richtung von dessen jeweiligen zweiten Ende von Fluid durchströmt wird.

Bei dem in der WO-A 2016/107694 gezeigten Meßwandler weisen die zu einem Paar baugleicher Rohre gehörigen zwei Rohre im besonderen jeweils eine andere Rohrlänge auf als die zum jeweils anderen Paar baugleicher Rohre gehörigen anderen zwei Rohre, derart, daß die ersten und zweiten Rohre jeweils eine größere Rohrlänge aufweisen als die dritten und vierten Rohre. Dadurch ist die Rohranordnung zum einen mittels solcher Rohre gebildet, denen lediglich paarweise gleiche Eigen- bzw. Resonanzfrequenzen innewohnen, mithin sind auch bereits in einer keine zusätzlichen, die paarweise baugleichen Rohre koppelende Knotenplatten aufweisenden Rohranordnung zwei mechanische Oszillatoren mit voneinander signifikant abweichenden, nämlich zumindest in einem Biegeschwingungsgrundmode voneinander abweichende Eigen- bzw. Resonanzfrequenzen aufweisenden Frequenzspektren ausgebildet. Zum anderen werden durch eine solche Rohranordnung parallele Strömungspfade mit voneinander entsprechend abweichenden Strömungswiderständen bereitgestellt, derart, daß jener der beiden vorbezeichneten Oszillatoren, der im zugehörigen Biegeschwingungsgrundmode die im Vergleich zum anderen der beiden Oszillatoren höhere Eigenfrequenz aufweist, dem strömenden Fluid mit dem im Vergleich zum anderen der beiden Oszillatoren kleineren Strömungswiderstand entgegenwirkt.

Zum Anregen und Aufrechterhalten von erzwungen mechanischen Schwingungen der Rohranordnung, insb. nämlich auch der vorbezeichneten Nutzschwingungen, weist der Meßwandler eine entsprechende, mittels zwei baugleichen elektro-dynamischen Schwingungserregern gebildete Erregeranordnung auf. Jeder der jeweils mittels eines Paars elektrischer Anschlußleitungen, beispielsweise inform von Anschlußdrähten und/oder inform von Leiterbahnen einer flexiblen Leiterplatte, mit der vorbezeichneten Umformerschaltung elektrisch verbundene Schwingungserreger dient im besonderen dazu, angesteuert von einem jeweiligen in der Umformerschaltung vorgesehenen Antriebselektronik generierten und entsprechend konditionierten, nämlich jeweils zumindest an sich verändernde Schwingungseigenschaften der jeweiligen Rohre angepaßten elektrischen Treibersignal eine damit eingespeiste elektrische Erregerleistung in auf die jeweiligen Rohre wirkende Antriebskräfte zu wandeln. Die Antriebselektronik ist im besonderen auch dafür eingerichtet, jedes der Treibersignale mittels interner Regelung so einzustellen, daß es jeweils eine der jeweils anzuregenden, gelegentlich auch zeitlich ändernden Nutzfrequenz entsprechende Signalfrequenz aufweist.

Aufgrund der vorbezeichneten Nutzschwingungen werden - nicht zuletzt auch für den Fall, daß die Nutzschwingungen Biegeschwingungen sind - im strömenden Medium bekanntlich auch von der momentanen Massendurchflußrate abhängige Corioliskräfte induziert. Diese wiederum können von der Massendurchflußrate abhängige, sich den Nutzschwingungen jeweils überlagernde Coriolisschwingungen mit Nutzfrequenz bewirken, derart, daß zwischen einlaßseitigen und auslaßseitigen Schwingungsbewegungen jedes der die Nutzschwingungen ausführenden und zugleich von Fluid durchströmten Rohre eine auch von der Massedurchflußrate abhängige, mithin auch als Maß für die Massendurchflußmessung nutzbare Laufzeit- bzw. Phasendifferenz detektiert werden kann. Bei einem zumindest abschnittsweise gekrümmten Rohr, bei denen für die Nutzschwingungen eine Schwingungsform, in der nämliches Rohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Rohr jeweils Drehschwingungen um eine zugehörige senkrecht zur erwähnten gedachten Schwingungsachse ausgerichtete gedachte Drehschwingungsachse ausführt.

Ferner weist der Meßwandler eine dem Erfassen von mechanischen Schwingungen der Rohranordnung, insb. nämlich den vorbezeichneten Biegeschwingungen der Rohre, sowie dem Erzeugen von jeweils Schwingungsbewegungen eines oder mehrerer der Rohre repräsentierenden Meßsignalen dienliche, mittels vier baugleicher elektro-dynamischen Schwingungssensoren gebildete Sensoranordnung auf. Zwecks der Vermeidung von für die Messung schädlichen Kontakten der vibrierenden Rohre untereinander oder mit dem des Wandlergehäuse weist jedes der Rohre lediglich solche Abstände zu den jeweils anderen Rohren wie auch zum Wandlergehäuse, nicht zuletzt auch zu einem jeweiligen Rand jeder der beiden in der Wandung des Tragelements vorgesehenen Öffnungen, auf, die jeweils unter allen Betriebsbedingungen freie Schwingungen mit für die Messung ausreichender Schwingungsamplitude ermöglichen.

Jedes der Rohre der vorbezeichneten Rohranordnung bzw. des damit gebildeten Meßwandlers weist jeweils wenigstens ein mit dem ersten Strömungsteiler der Rohranordnung verbundenes, mithin das erste Ende des Rohrs bildendes gerades erstes Teilsegment, ein an nämliches erstes Teilsegment anschließendes bogenförmiges zweites Teilsegment, ein an nämliches zweites Teilsegment anschließendes gerades drittes Teilsegment, ein an nämliches drittes Teilsegment anschließendes bogenförmiges viertes Teilsegment, ein an nämliches viertes Teilsegment anschließendes gerades fünftes Teilsegment, ein an nämliches fünftes Teilsegment anschließendes bogenförmiges sechstes Teilsegment sowie ein sowohl an nämliches sechstes Teilsegment anschließendes als auch mit dem zweiten Strömungsteiler der Rohranordnung verbundenes, mithin das zweite Ende des Rohrs bildendes gerades siebentes Teilsegment auf, wobei sowohl jedes der ersten und siebenten Teilsegmente als auch jedes der zweiten und sechsten Teilsegmente wie auch der dritten und fünften Teilsegmente des jeweiligen Rohrs typischerweise jeweils Paar einander baugleicher Teilsegmente bilden. Die bogenförmigen Teilsegmente können zudem beispielsweise kreisbogenförmig und die geraden Teilsegmente können beispielsweise hohlzylindrisch ausgebildet sein. Die ersten wie auch die siebenten Teilsegmente können beispielsweise durch Löten oder Schweißen stoffschlüssig bzw. durch Pressen und/oder Einwalzen kraft- und/oder formschlüssig mit dem jeweiligen Strömungsteiler verbunden sein.

Die Rohre der Rohranordnung sind jeweils, beispielsweise durch Biegen, so geformt, daß jedes der ersten, zweiten, dritten und vierten Rohre im Ergebnis jeweils eine in einer einzigen (Biege-)Ebene liegende Rohrform aufweist. Zudem weist jedes der Rohre jeweils eine erste gedachte Symmetrieebene sowie eine dazu senkrechte zweite gedachte Symmetrieebene auf und ist jedes der Rohre so geformt, daß es jeweils sowohl zur zugehörigen ersten Symmetrieebene als auch zur zugehörigen zweiten Symmetrieebene spiegelsymmetrisch ist, beispielsweise derart, daß im Ergebnis jedes der vorbezeichneten Rohre zumindest teilweise im wesentlichen V-förmig ausgebildete ist bzw. zumindest Teilbereiche mit einer im wesentlichen V-förmigen Silhouette aufweist. Darüberhinaus sind die Rohre und Strömungsteiler, wie bei Rohranordnungen der vorgenannten Art durchaus üblich, so ausgestaltet und angeordnet, daß die jeweilige Rohranordnung im Ergebnis eine sowohl zwischen dem ersten und zweiten Rohr als auch zwischen dem dritten und vierten Rohr verortete erste gedachte Symmetrieebene aufweist, bezüglich der die Rohranordnung spiegelsymmetrisch ist, und daß die Rohranordnung eine zu nämlicher ersten gedachten Symmetrieebene senkrechte, gleichwohl jedes Rohre - hier nämlich deren jeweiliges vierten Teilsegment - imaginär schneidende zweite gedachte Symmetrieebene aufweist, bezüglich der die Rohranordnung ebenfalls spiegelsymmetrisch ist. Zudem sind die Rohre so angeordnet, daß das erste Rohr zur ersten gedachten Symmetrieebene einen kleinsten Abstand aufweist, der gleich einem kleinsten Abstand ist, den das dritte Rohr zur ersten gedachten Symmetrieebene aufweist und daß das dritte Rohr zur ersten gedachten Symmetrieebene einen kleinsten Abstand aufweist, der gleich einem kleinsten Abstand ist, den das vierte Rohr zur ersten gedachten Symmetrieebene aufweist; dies im besonderen auch in der Weise, daß die ersten und zweiten Rohre zueinander bzw. zur ersten gedachten Symmetrieebene parallel sind und daß die dritten und vierten Rohre zueinander bzw. zur ersten gedachten Symmetrieebene parallel sind, beispielsweise auch derart, daß das erste Rohr und das dritte Rohr in einer gemeinsamen ersten Rohrebene liegen und daß das zweite Rohre und das vierte Rohre in einer gemeinsamen zweiten Rohrebene liegen. Im besonderen sind Rohre und Strömungsteiler der vorbezeichneten Rohranordnungen zudem so ausgestaltet und angeordnet, daß sowohl eine jeweilige gedachte Längsachse eines jeden der dritten Teilsegmente zu jeder der Längsachsen der jeweils anderen dritten Teilsegmente parallel ist als auch eine jeweilige gedachte Längsachse eines jeden der fünften Teilsegmente zu jeder der Längsachsen der jeweils anderen fünften Teilsegmente parallel ist, mithin weder eine gedachte Längsachse eines der dritten Teilsegmente eine Längsachse eines anderen der dritten Teilsegmente noch eine gedachte Längsachse eines der fünften Teilsegmente eine Längsachse eines anderen der fünften Teilsegmente schneidet. Die Rohranordnung und das Wandlergehäuse sind bei den vorbezeichneten Meßwandlern zudem jeweils so ausgebildet und positioniert, daß jedes der Rohre lediglich teilweise innerhalb des Hohlraums des Tragelements, mithin lediglich teilweise innerhalb des Hohlraums des Hüllelements angeordnet ist, und zwar derart, daß sowohl der zweiten Teilsegmente als auch jedes der sechsten Teilsegmente jeweils zumindest überwiegend innerhalb des Hohlraums des Tragelements angeordnet ist und daß sowohl jedes der dritten Teilsegmente als auch jedes der fünften Teilsegmente zumindest überwiegend, jedes der vierten Teilsegmente lediglich innerhalb des Hohlraums des Hüllelements, mithin ledig außerhalb des Hohlraums des Tragelements angeordnet ist.

Bei Meßwandlern der vom Vibrationstype dient das Wandlergehäuse u.a. dem Schutz der darin angeordneten Komponenten der Rohr-, Erreger- und Sensoranordnungen vor schädlichen Umwelteinflüssen, der Vermeidung von unerwünschten Schallemissionen durch die vibrierenden Rohre wie auch als Auffangbehälter für bei allfällig leckgeschlagener Rohranordnung daraus austretendes Fluid. Darüberhinaus dient das Wandlergehäuse im besonderen aber auch der Aufnahme von via angeschlossener Prozeßleitung in den Meßwandler eingeleiteten mechanischen Kräften und/oder Momenten, derart, daß von nämlichen Kräften und/oder Momenten allenfalls nur noch solche Anteile auf die innerhalb des Wandlergehäuses angeordnete Rohranordnung übertragen werden, die für die angestrebte hohe Meßgenauigkeit vernachlässigbar sind. Die vorbezeichneten Kräfte und Momente werden typischerweise überwiegend vom dementsprechend hohe Dehn-, Biege- und Verwindungssteifigkeiten aufweisenden Trägerelement des jeweiligen Wandlergehäuses aufgenommen. Bei den vorbezeichneten, aus dem Stand der Technik bekannten Meßwandlern werden die durch das jeweilige Trägerelement letztlich bereitgestellten Dehn-, Biege- und Verwindungssteifigkeiten maßgeblich dadurch mitbestimmt, wie die beiden in der Wandung des Tragelements vorgesehenen Öffnungen ausgebildet sind; dies im besonderen in der Weise, daß bei einer vorgegebenen Dimensionierung der Außenkontur des Trägerelements für eine dennoch ausreichende Dehn-, Biege- und Verwindungssteifigkeiten die Wandstärke von dessen Wandung umso größer bemessen sein muß, je größer der Querschnitt jeder der beiden Öffnungen gewählt ist bzw. daß die durch das Trägerelement bereitgestellten Dehn-, Biege- und Verwindungssteifigkeiten umso größer sind je kleiner die beiden Öffnungen ausgebildet sind. Umgekehrt müssen die beiden Öffnungen, wie bereits erwähnt, groß genug ausgebildet sein, um die mechanischen Schwingungen der Rohre nicht zu beeinträchtigen. Um die jeweiligen Meßwandler möglichst kompakt bzw. möglichst leicht bauen zu können, weisen die Rohre von deren jeweiliger Rohranordnung sowohl relativ zueinander als auch relativ zu den Rändern der vorbezeichneten Öffnungen in der Wandung des Trägerelements minimale bzw. möglichst geringe Abstände auf.

Untersuchungen an Meßsystemen der in Rede stehenden Art haben gezeigt, daß die Meßgenauigkeit, mit der die Massendurchflußrate ermittelt werden kann, bzw. umgekehrt der Meßfehler des Meßsystems in hohem Maße von solchen Einflußgrößen, nicht zuletzt einer Temperatur, einem Druck und einer Dichte des hindurchströmenden Fluids, bzw. deren zeitlicher Änderung abhängig sein kann, die einerseits im Betrieb des Meßsystems teilweise gar nicht oder nur mit sehr großem technischen Aufwand erfaßt werden können und deren Einfluß auf die Meßgenauigkeit andererseits kaum oder nur in unzureichendem Maße kompensiert werden kann; dies im besonderen auch derart, daß ein (Skalen-)Nullpunkt der Kalibrierkurve des jeweiligen Meßsystems, im Betrieb nicht ausreichend stabil ist bzw. ein Vertrauensbereich (Konfidenzintervall) für die mittels des jeweiligen Meßsystems ermittelten Massendurchfluß-Meßwerte zu groß ist. Weiterführende Untersuchungen haben ergeben, daß die vorbezeichneten, auch durch zusätzliche Messungen bislang nicht kompensierbaren Meßfehler u.a. auch auf solche Beeinflussungen bzw. Störungen der Schwingungen der Rohre zurückzuführen sind, die in die Rohre über die diese jeweils umgebende Atmosphäre, beispielsweise nämlich ein in der vorbezeichneten Kavität des Wandlergehäuses gehaltenes Luftvolumen, eingekoppelt werden; dies im besonderen auch in der Weise, daß jedes der vibrierenden Rohre die umgebende Atmosphäre entsprechend hin und her bewegt und die so bewegte Atmosphäre wiederum zusätzliche, gleichwohl zeitlich veränderliche Dämpfungen der Schwingungen, insb. auch der Coriolisschwingungen, jedes der Rohre bewirkt. Diese Störungen der Schwingungen bzw. die dadurch verursachten Meßfehler können umso größer sein, je kleiner die zwischen den Rohren etablierten Abstände sind. Zudem können nämliche Störungen bzw. deren Auswirkung auf die Meßgenauigkeit auch von der Temperatur, dem Druck und/oder Dichte des zu messenden Fluids abhängig sein, beispielsweise indem die Abstände aufgrund von Änderungen der Temperatur und/oder des Drucks zeitlich variieren oder indem das Ausmaß der Bewegung der Atmosphäre mit der Nutzfrequenz zeitlich variiert.

Ausgehend vom vorbezeichneten Stand der Technik besteht eine Aufgabe der Erfindung darin, Meßwandler der in Rede stehenden Art dahingehend zu verbessern, daß das vorbezeichnete gegenseitige Beeinflussen der Schwingungen der Rohre verringert bzw. vermieden wird; dies insb. auch bei möglichst kompakter und möglichst leichter Bauweise des Meßwandlers.

Zur Lösung der Aufgabe besteht die Erfindung in einem Meßwandler für ein dem Messen wenigstens einer Meßgröße eines strömenden Fluids dienlichen vibronisches Meßsystem, welcher Meßwandler gemäß dem Patentanspruch 1 ausgeführt ist. Weitere Ausgestaltungen der Erfindungen sind in den Unteransprüchen spezifiziert.

Ein Grundgedanke der Erfindung besteht darin, eine die Meßgenauigkeit von vibronischen Meßsystemen der in Rede stehenden Art beeinträchtigendes Kopplung der Schwingungen von einem ersten Paar Rohre auf ein zweites Paar Rohre dadurch zu vermeiden bzw. in ausreichendem Maß zu verringern, daß zumindest die im Betrieb schwingenden geraden Teilsegmente der Rohre des einen Paares nicht parallel zu den ebenfalls im Betrieb schwingenden geraden Teilsegmente der Rohre des anderen Paares verlaufen. Im Ergebnis kann der Abstand zwischen den Rohren ausgehend von einem die Kopplung eigentlich begünstigenden, gleichwohl aufgrund der Bauform zunächst nicht zu vermeidenden geringen Betrag innerhalb der Öffnung des Trägerelements im weiteren Verlauf sehr rasch auf einen die Kopplung verhindernden höheren Betrag vergrößert werden, derart, daß mit zunehmender Amplitude der Schwingungsbewegungen der Rohre auch nämlicher Abstand größer, mithin die dadurch bedingte Kopplung immer geringer wird.

Ein Vorteil der Erfindung besteht auch darin, daß der Nullpunkt des Meßsystems auch eine vergleichsweise geringe Abhängigkeit von der Temperatur und/oder vom Druck des zu messenden Fluids, mithin eine verbesserte Stabilität aufweist. Darüberhinaus ist ein weiterer Vorteil der Erfindung auch darin zu sehen, daß aufgrund der Verwendung von lediglich paarweise baugleichen Rohren auch mittels vier jeweils das gleiche Kaliber sowie aus dem gleichem Material hergestellte Rohrwandung aufweisenden Rohren zum einen sehr einfach eine Rohranordnung mit paarweise voneinander abweichende Strömungswiderstände aufweisenden Strömungspfaden und zum anderen sehr einfach auch eine Rohranordnung mit lediglich paarweise gleichen Eigenfrequenzen bei den Biegeschwingungsgrundmoden der Rohre bereitgestellt werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im Einzelnen zeigen:
- Fig. 1, 2A, 2B: in verschieden, teilweise auch geschnitten und/oder auch perspektivischen, Seitenansichten ein vibronisches Meßsystem;
- Fig. 3A, 3B: in verschieden, teilweise auch geschnitten und/oder auch perspektivischen, Seitenansichten einen für ein vibronisches Meßsystem gemäß Fig. 1, 2A bzw. 2B geeigneten Meßwandler;
- Fig. 4, 5A, 5B: in verschieden, teilweise auch geschnitten und/oder auch perspektivischen, Seitenansichten eine weitere Variante eines vibronisches Meßsystems;
- Fig. 6A, 6B: in verschieden, teilweise auch geschnitten und/oder auch perspektivischen, Seitenansichten einen für ein vibronisches Meßsystem gemäß Fig. 4, 5A bzw. 5B geeigneten Meßwandler;
- Fig. 7A, 7B: in zwei Seitenansichten eine Rohranordnung eines Meßwandlers gemäß Fig. 3A, 3B bzw. gemäß Fig. 6A, 6B;
- Fig. 8, 9A, 9B: in drei weiteren Seitenansichten die Rohranordnung eines Meßwandlers gemäß Fig. 7A und 7B bzw. gemäß ; und
- Fig. 10: schematisch Teilansichten einer Rohranordnung gemäß Fig. 7A, 7B, 8 bzw. 9A.

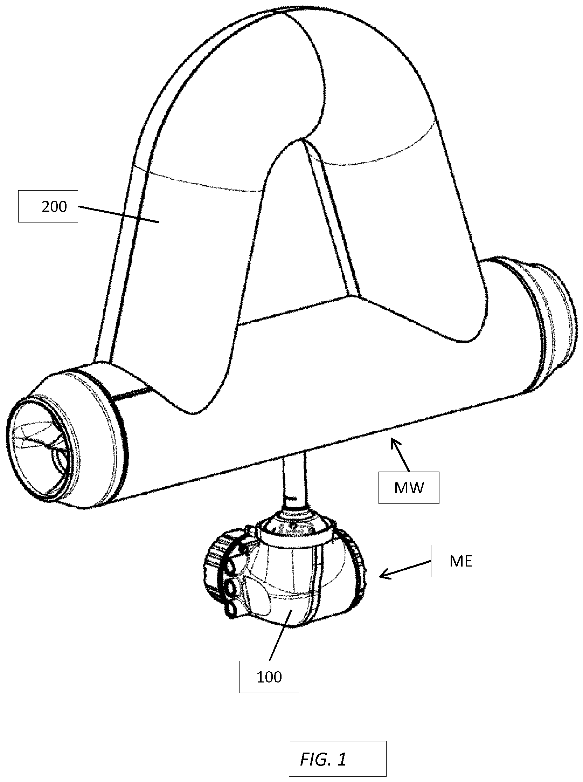

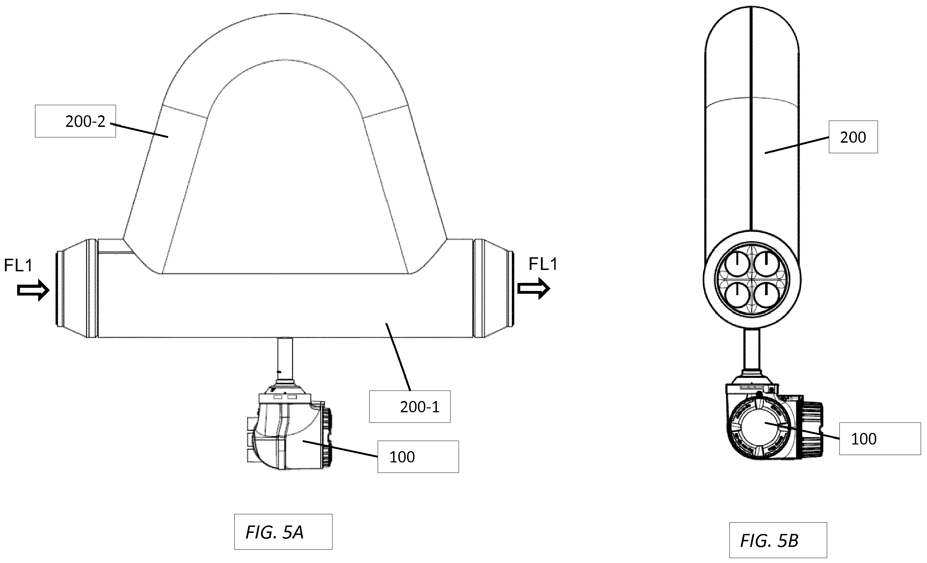

In Fig. 1, 2A und 2B, bzw. 4, 5A und 5B sind Ausführungsbeispiele bzw. Ausgestaltungvarianten eines dem Messen und/oder Überwachen wenigstens eines, insb. zeitlich veränderlichen, Strömungsparameters, beispielsweise einer Massendurchflußrate, einer Volumendurchflußrate und/oder einer Strömungsgeschwindigkeit, und/oder zum Messen und/oder Überwachen wenigstens eines, insb. zeitlich veränderlichen, Stoffparameters, beispielsweise einer Dichte und/oder einer Viskosität, eines zumindest zeitweise strömenden Fluids FL1 dienliches vibronisches Meßsystems schematisch dargestellt. Das Meßsystem ist im besonderen dafür vorgesehen bzw. eingerichtet, in den Verlauf einer das als Meßstoff dienliche Fluid FL1 - beispielsweise nämlich ein Gas, eine Flüssigkeit oder eine Dispersion - führenden und/oder als Rohrleitung ausgebildeten Prozeßleitung eingegliedert und im Betrieb von dem via Prozeßleitung zu- bzw. wieder abgeführten Fluid FL1 zumindest zeitweise durchströmt zu werden.

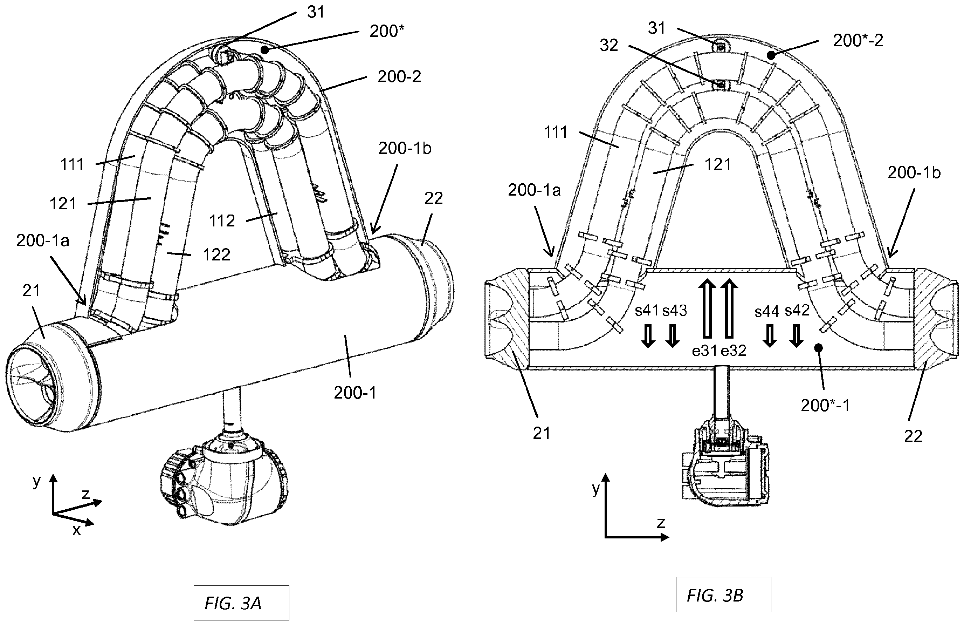

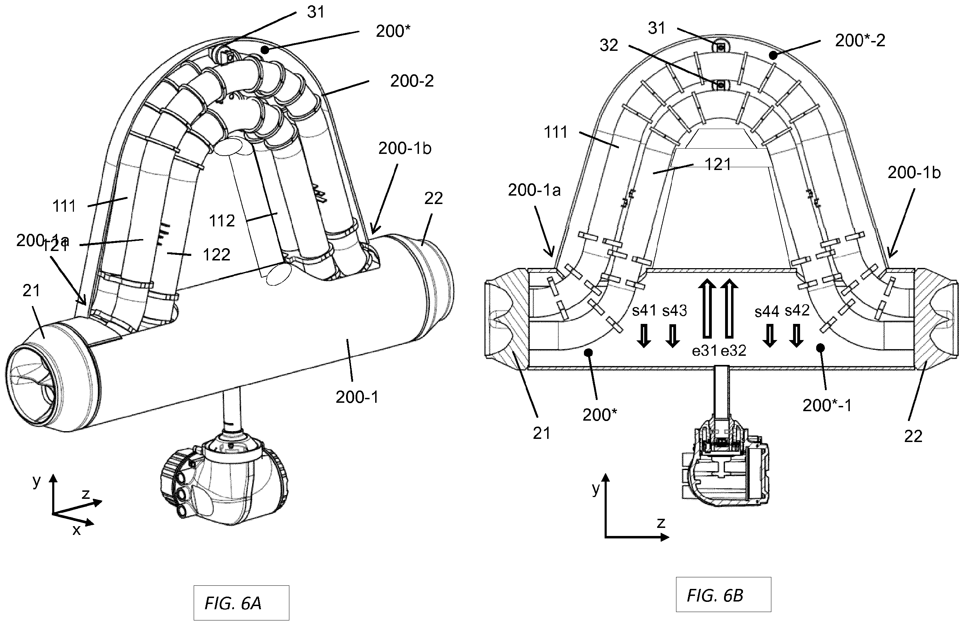

Wie in Fig. 3A, 3B, 6A und 6B dargestellt bzw. aus einer Zusammenschau der Fig. 1, 2A, 2B, 3A und 3B oder 4, 5A, 5B, 6A und 6B ohne weiters ersichtlich, umfaßt das Meßsystem einen Meßwandler MW mit einer mittels vier- beispielsweise zwecks Bereitstellung von parallelen Strömungspfaden mit voneinander abweichendem Strömungswiderständen - lediglich paarweise baugleichen Rohren (111, 121, 112, 122) sowie zwei daran jeweils angeschlossener Strömungsteiler (21, 22) gebildete Rohranordnung, eine Erregeranordnung (31, 32) zum Anregen und Aufrechterhalten von mechanischen Schwingungen der Rohranordnung, nicht zuletzt von deren Rohren, sowie eine Sensoranordnung (41, 42, 43, 44) zum Erfassen von mechanischen Schwingungen der Rohranordnung, insb. nämlich von mechanischen Schwingungen der Rohre. Zudem kann im Meßwandler beispielsweise auch eine dem Erfassen von Temperaturen innerhalb der Rohranordnung dienliche Temperaturmeßanordnung und/oder eine dem Erfassen von mechanischen Spannungen innerhalb der Rohranordnung dienliche Dehnungsmeßanordnung vorgesehen sein.

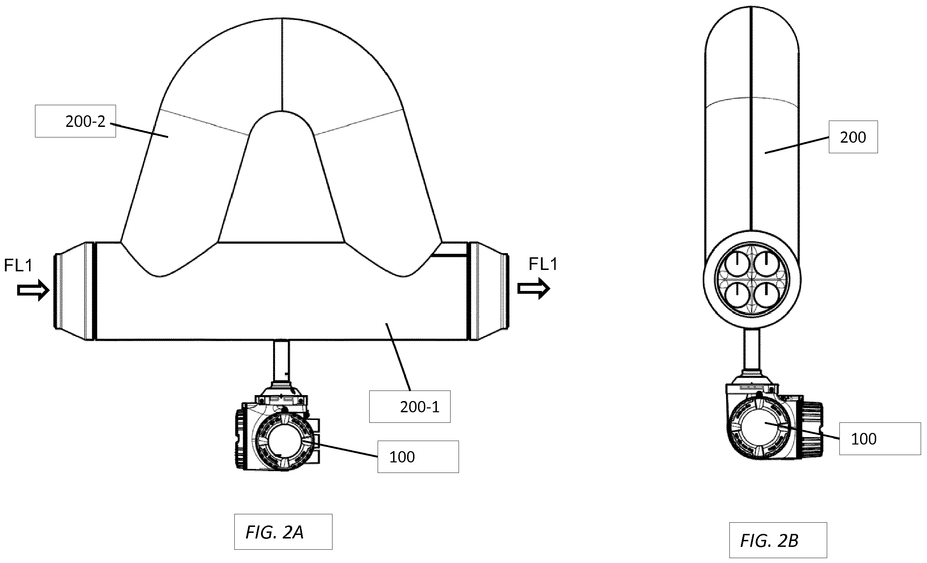

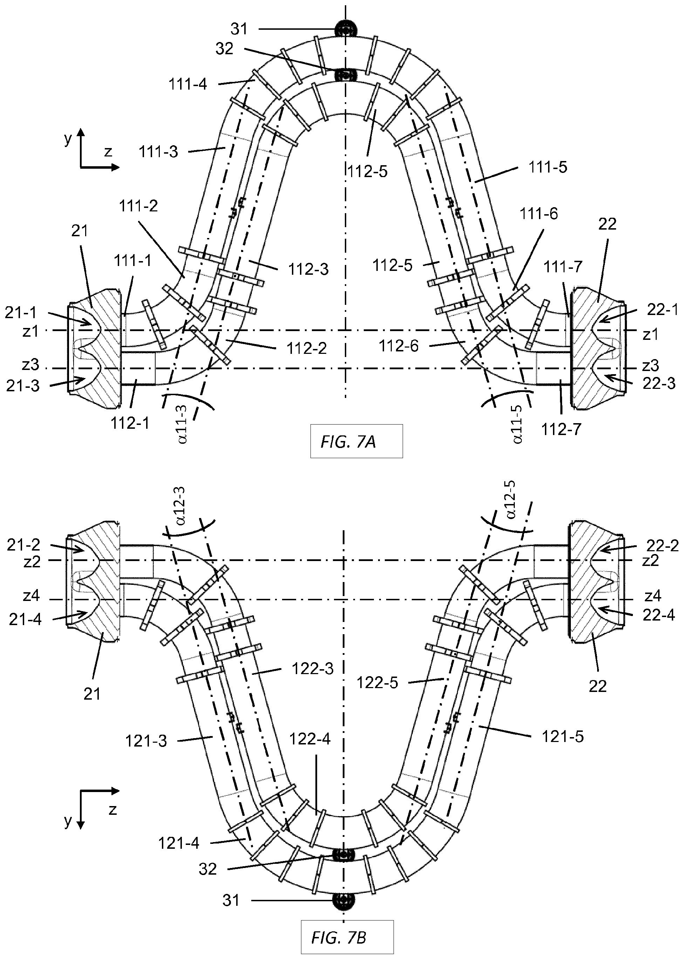

Die Rohranordnung des erfindungsgemäßen Meßwandlers bzw. des damit gebildeten Meßsystems ist nochmals in den Fig. 7A, 7B, 8, 9A, 9B bzw. 10 gezeigt und weist ein gekrümmtes erstes Rohr 111, ein nämlichem Rohr 111 baugleiches gekrümmtes zweites Rohr 121, ein gekrümmtes drittes Rohr 112 sowie ein lediglich nämlichen Rohr 112, mithin weder dem Rohr 111 noch dem Rohr 121 baugleiches viertes Rohr 122 auf. Darüberhinaus weist die Rohranordnung einen ersten Strömungsteiler 21 mit vier Strömungsöffnungen 21-1, 21-2, 21-3, 21-4 und einen, beispielsweise nämlichem Strömungsteiler 21 baugleichen, zweiten Strömungsteiler 22 mit gleichermaßen vier Strömungsöffnungen 22-1, 22-2, 22-3, 22-4 auf. Jedes der Rohre 111, 112, 121, 122 erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer - beispielsweise metallischen - Rohrwandung umschlossenes, sich jeweils vom jeweiligen ersten Ende des jeweiligen Rohrs bis zum jeweiligen zweiten Ende nämlichen Rohrs erstreckenden Lumen auf. Darüberhinaus ist jedes der Rohre 111, 112, 121, 122 - wie auch in Fig. 3A und 3B bzw. 6A und 6B jeweils gezeigt bzw. aus einer Zusammenschau der Fig. 2A, 2B, 3A, 3B, 7A, 7B und 8 bzw. 5A, 5B, 6A, 6B, 7A, 7B und 8 ohne weiteres ersichtlich - jeweils an jeden der beiden Strömungsteiler 21, 22 angeschlossen, beispielsweise nämlich stoff-, kraft- und/oder formschlüssig damit verbunden, derart, daß das Rohr 111 mit dessen ersten Ende in eine erste Strömungsöffnung 21-1 des Strömungsteilers 21 und mit dessen zweiten Ende in eine erste Strömungsöffnung 22-1 des Strömungsteilers 22, das Rohr 121 mit dessen ersten Ende in eine zweite Strömungsöffnung 21-2 des Strömungsteilers 21 und mit dessen zweiten Ende in eine zweite Strömungsöffnung 22-2 des Strömungsteilers 22, das Rohr 112 mit dessen ersten Ende in eine dritte Strömungsöffnung 21-3 des Strömungsteilers 21 und mit dessen zweiten Ende in eine dritte Strömungsöffnung 22-3 des Strömungsteilers 22 und das Rohr 122 mit dessen ersten Ende in eine vierte Strömungsöffnung 21-4 des Strömungsteilers 21 und mit dessen zweiten Ende in eine vierte Strömungsöffnung 22-4 des Strömungsteilers 22 münden. Wie aus der Zusammenschau der Fig. 2A, 2B, 3A, 3B, 7A, 7B und 8 bzw. 5A, 5B, 6A, 6B, 7A, 7B und 8 ersichtlich kann der Strömungsteiler 21 in Strömungsrichtung des Fluids FL1 einlaßseitig angeordnet sein bzw. als Leitungsverzweigung dienen und kann der Strömungsteiler 22 entsprechend in Strömungsrichtung des Fluids FL1 auslaßseitig angeordnet sein bzw. als Leitungsvereinigung dienen. Gemäß einer weiteren Ausgestaltung der Erfindung ist ferner vorgesehen, daß die Rohranordnung genau vier Rohre, mithin außer den vorbezeichneten Rohren 111, 112, 121, 122 kein weiteres an den Strömungsteiler 21 und den Strömungsteiler 22 angeschlossenes Rohr aufweist. Die vorbezeichnete Rohrlänge entspricht hier einer gestreckten Länge bzw. einer Länge einer gedachten Mittellinie des jeweiligen Rohrs, wobei die Rohrlänge des Rohrs 111 gleich der Rohrlänge des Rohrs 121 bzw. die Rohrlänge des Rohrs 121 gleich der Rohrlänge des Rohrs 122 ist. Gemäß einer weiteren Ausgestaltung der Erfindung ist zudem die Rohrlänge des Rohrs 111 lediglich gleich der Rohrlänge des Rohrs 121, gleichwohl größer als die Rohrlänge sowohl des Rohrs 121 als auch des Rohrs 122, bzw. ist die Rohrlänge des Rohrs 121 lediglich gleich der Rohrlänge des Rohrs 122, gleichwohl kleiner als die Rohrlänge sowohl des Rohrs 111 als auch des Rohrs 112.

Die Rohrwandung jedes der Rohre 111, 121, 112, 122 der Rohranordnung weist jeweils eine vorgegebene - beispielsweise auch im wesentlichen einheitliche - Wandstärke auf und kann - wie bei Rohranordnungen der in Rede stehenden Art bzw. damit gebildeten Meßwandlern bzw. Meßsystemen durchaus üblich - beispielsweise aus gleichem Material und/oder einem Metall, insb. nämlich jeweils einem Edelstahl oder jeweils einer Nickelbasislegierung, bestehen. Die Rohre 111, 121, 112, 122 können zudem beispielsweise jeweils einstückig ausgebildet, beispielsweise nämlich nahtlos oder zumindest im Falle einer Rohrwandung aus Metall mit einer geschweißten Naht hergestellt sein, und/oder jeweils durch Biegen eines rohrförmigen Halbzeugs geformt sein, beispielsweise derart, daß jedes der Rohre 111, 121, 112, 122 - wie auch in Fig. 2A, 2B, 3A und 3B bzw. 5A, 5B, 6A und 6B jeweils angedeutet - im wesentlichen V-förmig ausgebildet ist bzw. eine V-förmige Silhouette aufweist und/oder daß jedes der Rohre im Ergebnis eine in einer einzigen (Biege-)Ebene liegende Rohrform aufweist. Nach einer weiteren Ausgestaltung der Erfindung weist jedes der Rohre jeweils ein Kaliber, nämlich einen Innendurchmesser, auf, das nicht weniger als 20 mm, beispielsweise auch mehr als 40 mm beträgt und/oder das gleich ist dem Kaliber jedes der anderen der Rohre. Indem die beiden Rohre 111, 121 bzw. die beiden Rohre 121, 122 baugleich sind, ist das vorbezeichnete Kaliber des Rohrs 111 gleich dem Kaliber des Rohrs 121 bzw. ist das Kaliber des Rohrs 121 gleich dem Kaliber des Rohrs 122. Gemäß einer weiteren Ausgestaltung der Erfindung ist zudem das Kaliber jedes der Rohre 111, 112, 121, 122 gleich dem Kaliber jedes anderen der Rohre 111, 112, 121 bzw. 122 und/oder weist jedes der Rohre 111, 121, 112, 122 ferner jeweils ein Rohrlänge-zu Kaliber-Verhältnis, gemessen als ein Quotient der jeweiligen Rohrlänge zum jeweiligen Kaliber, auf, das größer als 25 (25:1), beispielsweise aber auch kleiner als 30(30:1) ist. Nach einer weiteren Ausgestaltung der Erfindung weist die Rohrwandung jedes der Rohre jeweils eine kleinste Wandstärke auf, die nicht weniger als 1 mm, beispielsweise auch mehr als 1,5 mm beträgt und/oder die gleich ist der kleinsten Wandstärke der Rohrwandung jedes der anderen der Rohre. Indem die beiden Rohre 111, 121 bzw. die beiden Rohre 121, 122 baugleich sind, ist die vorbezeichnete kleinste Wandstärke der Rohrwandung des Rohrs 111 gleich der kleinsten Wandstärke der Rohrwandung des Rohrs 121 bzw. ist die kleinste Wandstärke der Rohrwandung des Rohrs 121 gleich der kleinsten Wandstärke der Rohrwandung des Rohrs 122. Gemäß einer weiteren Ausgestaltung der Erfindung ist zudem die vorbezeichnete Wandstärke Rohrwandung jedes der Rohre 111, 112, 121, 122 gleich der kleinsten Wandstärke der Rohrwandung jedes anderen der Rohre 111, 112, 121 bzw. 122.

Zum Verbinden der Rohranordnung bzw. des damit gebildeten Meßwandlers oder Meßsystems mit der vorbezeichneten, das Fluid FL1 führenden Prozeßleitung kann der Strömungsteiler 21 einen - beispielsweise dem Anschluß der Rohranordnung an ein im Betrieb das Fluid FL1 zuführendes Leitungssegment nämlicher Prozeßleitung dienlichen - ersten Anschlußflansch und kann der Strömungsteiler 22 einen - beispielsweise dem Anschluß der Rohranordnung an ein das Fluid FL1 wieder abführendes Leitungssegment der Prozeßleitung dienlichen - zweiten Anschlußflansch aufweisen. An jedem der vorbezeichneten Anschlußflansche kann beispielsweise jeweils eine Dichtfläche zum fluiddichten bzw. leckagefreien Verbinden der Rohranordnung mit dem jeweils korrespondierenden Leitungssegment der Prozeßleitung ausgebildet sein. Jede der beiden Dichtflächen kann jeweils einen eine Nennweite des Meßwandlers definierenden kleinsten Durchmesser aufweisen, der mehr als 100 mm beträgt, und/oder einen - hier eine Einbaulänge der Rohranordnung bzw. des damit gebildeten Meßwandlers definierenden - kleinsten Abstand zur jeweils anderen der Dichtflächen aufweisen, der mehr als 1000 mm und/oder weniger als 3000 mm beträgt.

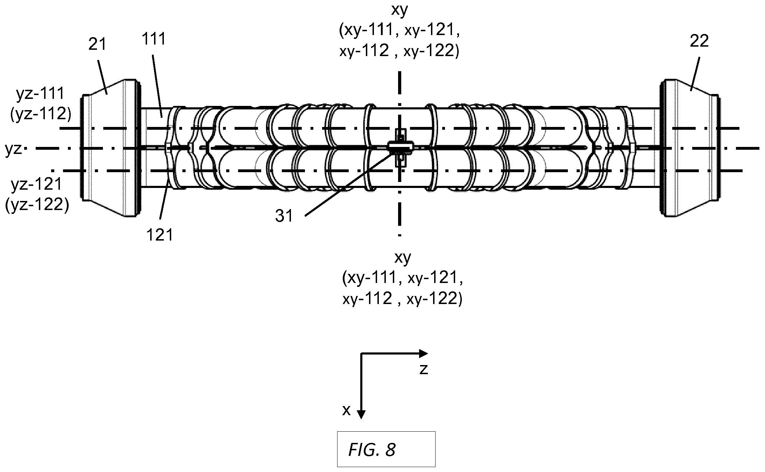

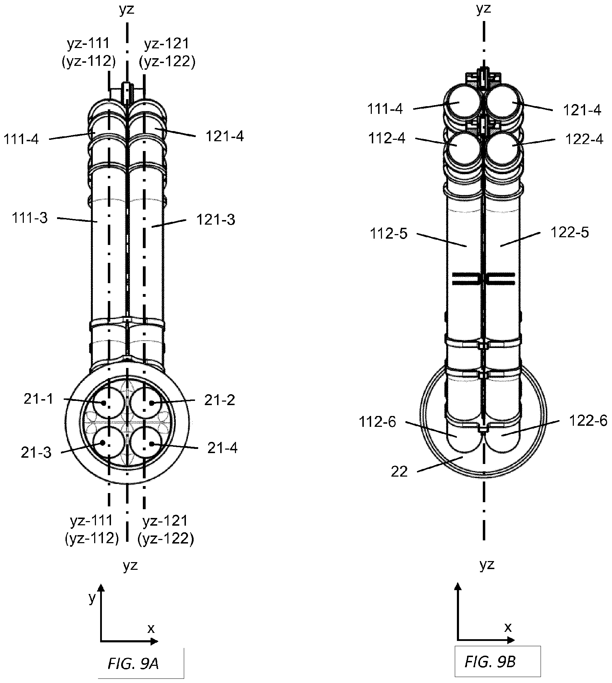

Die Rohre 111, 121, 112, 122 und die Strömungsteiler 21, 22 sind nach einer weiteren Ausgestaltung der Erfindung ferner so ausgebildet und angeordnet, daß die Rohranordnung, wie auch in Fig. 7A bzw. 7B schematisch dargestellt, eine erste gedachte Verbindungsachse z1, die einen Mittelpunkt der Strömungsöffnung 21-1 und einen Mittelpunkt der Strömungsöffnung 22-1 imaginär miteinander verbindet, eine zweite gedachte Verbindungsachse z2, die einen Mittelpunkt der Strömungsöffnung 21-2 und einen Mittelpunkt der Strömungsöffnung 22-2 imaginär miteinander verbindet, eine dritte gedachte Verbindungsachse z3, die einen Mittelpunkt der Strömungsöffnung 21-3 und einen Mittelpunkt der Strömungsöffnung 22-3 imaginär miteinander verbindet sowie eine vierte gedachte Verbindungsachse z4, die einen Mittelpunkt der Strömungsöffnung 21-4 und einen Mittelpunkt der Strömungsöffnung 22-4 imaginär miteinander verbindet, aufweist, derart, daß jede vorbezeichneten gedachten Verbindungsachsen z1, z2, z3, z4 jeweils parallel zu jeder anderen nämlicher Verbindungsachsen z1, z2, z3 bzw. z4 verläuft. Nach einer weiteren Ausgestaltung der Erfindung ist - wie auch aus Fig. 7A, 7B, 8, 9A bzw. 9B ohne weiteres ersichtlich - jedes der Rohre 111, 112, 121, 122 so geformt, daß es jeweils eine, beispielsweise nämlich einer jeweilige gedachte Längsschnittebene entsprechende, erste gedachte Symmetrieebene yz-111, yz-121, yz-112 bzw. yz-122 sowie eine dazu senkrechte, beispielsweise nämlich einer jeweiligen gedachten Querschnittebene entsprechende, zweite gedachte Symmetrieebene xy-111, xy-121, xy-112 bzw. xy-122 aufweist und daß es jeweils sowohl zur zugehörigen ersten Symmetrieebene als auch zur zugehörigen zweiten Symmetrieebene spiegelsymmetrisch ist. Die Rohre 111, 121, 112, 122 und die Strömungsteiler 21, 22 können ferner so ausgebildet und angeordnet sein, daß sowohl die gedachte Symmetrieebene yz-111 parallel zur gedachten Symmetrieebene yz-121 als auch die gedachte Symmetrieebene yz-112 parallel zur gedachten Symmetrieebene yz-122 verläuft und/oder daß sowohl die gedachte Symmetrieebene yz-111 koinzident mit der gedachten Symmetrieebene yz-112 als auch die gedachte Symmetrieebene yz-121 koinzident mit der gedachten Symmetrieebene yz-122 ist. Nach einer weiteren Ausgestaltung sind die Rohre 111, 121, 112, 122 und die Strömungsteiler 21, 22 ferner so ausgebildet und angeordnet, daß die Rohranordnung zumindest eine sowohl zwischen dem Rohr 111 und dem Rohr 121 als auch zwischen dem Rohr 112 und dem Rohr 122 verortete erste gedachte Symmetrieebene yz aufweist, bezüglich der die Rohranordnung, wie auch aus Fig. 8 und 9A bzw. deren Zusammenschau ohne weiteres ersichtlich, spiegelsymmetrisch ist. Die Rohranordnung kann - wie auch aus einer Zusammenschau der Fig. 7A, 7B, 8, 9A und 9B ohne weiteres ersichtlich - ferner so ausgebildet sein, daß deren erste Symmetrieebene yz beispielsweise parallel zu jeder der vorbezeichneten Symmetrieebenen yz-111, yz-121, yz-112, yz-122 der Rohre 111, 121, 112 bzw. 122 ausgerichtet und/oder jeweils im gleichen Abstand zu jeder der vorbezeichneten Symmetrieebenen yz-111, yz-121, yz-112, yz-122 der Rohre 111, 121, 112 bzw. 122 angeordnet ist; dies beispielsweise auch derart, daß die beiden Rohre 111, 121 jeweils zueinander bzw. zur vorbezeichneten gedachten Symmetrieebene yz der Rohranordnung und die beiden Rohre 112, 122 jeweils zueinander bzw. zur gedachten Symmetrieebene yz der Rohranordnung parallel sind und/oder daß die beiden Rohre 111, 121 in einer gemeinsamen ersten Rohrebene liegen und die Rohre 121, 122 in einer gemeinsamen zweiten Rohrebene liegen. Dementsprechend weist nach einer weiteren Ausgestaltung der Erfindung das Rohr 111 zur gedachten Symmetrieebene yz der Rohranordnung einen kleinsten Abstand auf, der gleich einem kleinsten Abstand ist, den das Rohr 112 zur nämlicher gedachten Symmetrieebene yz aufweist und/oder weist das Rohr 121 zur gedachten Symmetrieebene yz der Rohranordnung einen kleinsten Abstand auf, der gleich einem kleinsten Abstand ist, den das Rohr 122 zu nämlicher gedachten Symmetrieebene yz aufweist. Nach einer weiteren Ausgestaltung der Erfindung ist ferner vorgesehen, daß die Rohranordnung außer der vorbezeichneten ersten gedachten Symmetrieebene yz eine dazu senkrechte, gleichwohl jedes der Rohre imaginär schneidende zweite gedachte Symmetrieebene xy aufweist und auch bezüglich nämlicher zweiten gedachten Symmetrieebene xy spiegelsymmetrisch ist.

Nach einer Ausgestaltung der Erfindung ist jedes der Rohre 111, 121, 112, 122 der Rohranordnung jeweils dafür eingerichtet, in dessen jeweiligen Lumen Fluid, insb. nämlich jeweils ein Teilvolumen des zu messenden Fluids FL1, zu führen und währenddessen vibrieren gelassen zu werden, beispielsweise nämlich jeweils - insb. einen mit der wenigstens einen Meßgröße korrespondierenden Meßeffekt bewirkende und/oder mittels der Erregeranordnung angeregte - erzwungene mechanische Schwingungen um eine jeweils zughörige statische Ruhelage auszuführen; dies im besonderen in der Weise, daß jedes der Rohre der Rohranordnung vibrieren gelassenen und währenddessen ausgehend von dessen jeweiligen ersten Ende in Richtung von dessen jeweiligen zweiten Ende von Fluid durchströmt wird. Die vorbezeichneten erzwungenen mechanischen Schwingungen können, wie bei Meßwandlern der in Rede stehenden Art durchaus üblich, zumindest anteilig erzwungene Biegeschwingungen der Rohre um eine jeweilige gedachte, nämlich das jeweiligen Rohr imaginär schneidende Schwingungsachse der Rohranordnung sein; dies im besonderen auch in der Weise, daß die vorbezeichneten (vier) gedachten Schwingungsachsen - beispielsweise bei in statischer Ruhelage befindlichen Rohren - zueinander und/oder zu den vorbezeichneten gedachten Verbindungsachsen z1, z2, z3, z4 im wesentlichen parallel sind.

Die Erregeranordnung ist nach einer Ausgestaltung der Erfindung insb. dafür vorgesehen bzw. eingerichtet, dorthin eingespeiste elektrische Leistung in erzwungene mechanische Schwingungen, beispielswiese nämlich Biegeschwingungen, der Rohre der Rohranordnung um eine jeweilige statische Ruhelage zu wandeln, während die Sensoranordnung insb. dafür vorgesehen bzw. eingerichtet ist, mechanische Schwingungen nämlicher Rohre, nicht zuletzt mittels der Erregeranordnung erzwungene mechanische Schwingungen und/oder Biegeschwingungen der Rohre, zu erfassen und ein erstes Schwingungsmeßsignal s41, ein zweites Schwingungsmeßsignal s42, ein drittes Schwingungsmeßsignal s43 sowie ein viertes Schwingungsmeßsignal s44 bereitzustellen, von welchen - beispielsweise elektrischen - Schwingungsmeßsignalen s41, s42, s43, s44 jedes zumindest anteilig Schwingungsbewegungen eines oder mehrerer der Rohre 111, 121, 112, 122 der Rohranordnung repräsentiert, beispielsweise jeweils mittels einer jeweiligen, mit Schwingungsbewegungen der Rohre korrespondierenden veränderlichen elektrischen Spannung; dies im besonderen in der Weise, daß die ersten und zweiten Schwingungsmeßsignale s41, s42 einer Änderung einer Massendurchflußrate des in der Rohranordnung geführten Meßstoffs mit einer Änderung einer ersten Phasendifferenz, nämlich einer Änderung einer Differenz zwischen einem Phasenwinkel des Schwingungsmeßsignals s41 und einem Phasenwinkel des Schwingungsmeßsignals s42 folgen und daß die dritten und vierten Schwingungsmeßsignale s43, s44 einer Änderung einer Massendurchflußrate des in der Rohranordnung geführten Meßstoffs mit einer Änderung einer zweiten Phasendifferenz, nämlich einer Änderung einer Differenz zwischen einem Phasenwinkel des Schwingungsmeßsignals s43 und einem Phasenwinkel des Schwingungsmeßsignals s44 folgen, und/oder in der Weise, daß jedes der vorbezeichneten Schwingungsmeßsignale s41, s42, s43, s44 einer Änderung einer Dichte des in der Rohranordnung geführten Meßstoffs jeweilis mit einer Änderung einer jeweiligen Signalfrequenz wenigstens einer spektrale Signalkomponente folgt. Zum Anregen und Aufrechterhalten von erzwungen mechanischen Schwingungen der Rohre weist die Erregeranordnung gemäß einer weiteren Ausgestaltung der Erfindung einen - beispielsweise elektrodynamischen - ersten Schwingungserreger 31 sowie wenigstens einen - beispielsweise elektrodynamischen und/oder zum ersten Schwingungserreger 31 baugleichen - zweiten Schwingungserreger 32 auf. Wie auch in Fig. 3A, 3B, 6A, 6B, 7A und 7B angedeutet bzw. aus deren Zusammenschau ohne weiteres ersichtlich, kann beispielsweise der Schwingungserreger 31 mit jedem der beiden Rohre 111, 121 und der Schwingungserreger 32 mit jedem der beiden Rohre 112, 122 mechanischen verbunden sein. Jeder der beiden Schwingungserrerger 31, 32 ist gemäß einer Ausgestaltung der Erfindung ferner dafür vorgesehen bzw. eingerichtet, von der Meß- und Betriebselektronik ME eingespeiste elektrische Leistung in erzwungene mechanische Schwingungen der mit dem jeweiligen Schwingungserreger 31 bzw. 32 jeweils verbundenen Rohre 111, 121 bzw. 112, 122 bewirkende mechanische Leistung zu wandeln; dies im besonderen in der Weise, daß der Schwingungserreger 31 differenziell auf die die beiden Rohre 111, 121 wirkt, nämlich lediglich gegengleiche Anregungskräfte in die beiden Rohre 111, 121 einleiten kann bzw. einleitet, und daß der Schwingungserreger 32 differenziell auf die beiden Rohre 112, 122 wirkt, nämlich lediglich gegengleiche Anregungskräfte in die beiden Rohre 112, 122 einleiten kann bzw. einleitet.

Zum Erzeugen der vorbezeichneten Schwingungsmeßsignale s41, s42, s43, s44 weist die Sensoranordnung gemäß einer weiteren Ausgestaltung der Erfindung einen, beispielsweise elektrodynamischen, ersten Schwingungssensor 41 für das Schwingungsmeßsignal s41, einen - beispielsweise elektrodynamischen und/oder zum ersten Schwingungssensor 41 baugleichen - zweiten Schwingungssensor 42 für das Schwingungsmeßsignal s42, einen - beispielsweise elektrodynamischen und/oder zum ersten Schwingungssensor 41 baugleichen - dritten Schwingungssensor für das Schwingungsmeßsignal s43 sowie wenigstens einen - beispielsweise elektrodynamischen und/oder zum dritten Schwingungssensor 43 baugleichen - vierten Schwingungssensor 44 für das Schwingungsmeßsignal s44 auf. Wie auch in Fig. 3A, 3B, 6A, 6B, 7A, und 7B angedeutet bzw. aus deren Zusammenschau ohne weiteres ersichtlich, können beispielsweise sowohl der Schwingungssensor 41 als auch der Schwingungssensor 42 mit jedem der beiden Rohre 111, 121 mechanischen verbunden sein und können beispielsweise sowohl der Schwingungssensor 43 als auch der Schwingungssensor 44 mit jedem der beiden Rohre 112, 122 mechanischen verbunden sein, beispielsweise derart, daß der Schwingungssensor 41 und der der Schwingungssensor 43 jeweils einlaßseitige Schwingungsbewegungen der Rohre 111, 121, 112 bzw. 122 erfassen und daß der Schwingungssensor 42 und der der Schwingungssensor 44 jeweils ausaßseitige Schwingungsbewegungen der Rohre 111, 121, 112 bzw. 122. Beispielsweise können die Schwingungssensoren auch in der Weise positioniert sein, daß der Schwingungssensor 41 gleichweit vom Strömungsteiler 21 beabstandet ist wie der Schwingungssensor 42 vom Strömungsteiler 22 und/oder daß der Schwingungssensor 43 gleichweit vom Strömungsteiler 21 beabstandet ist wie der Schwingungssensor 44 vom Strömungsteiler 22, und/oder in der Weise, daß die beiden Schwingungssensoren 41, 42 jeweils gleichweit vom vorbezeichneten Schwingungserreger 31 und/oder die beiden Schwingungssensoren 43, 44 jeweils gleichweit vom vorbezeichneten Schwingungserreger 32 positioniert sind. Gemäß einer weiteren Ausgestaltung der Erfindung ist jeder der vorbezeichneten Schwingungssensoren 41, 42 ferner dafür vorgesehen bzw. eingerichtet, entgegengesetzte, ggf. auch gegengleiche, Schwingungsbewegungen der Rohre 111, 121 zu erfasssen und in das (nämliche Schwingungsbewegungen jeweils repräsentierende) jeweilige Schwingungsmeßsignal s41, s42 zu wandeln und ist jeder der vorbezeichneten Schwingungssensoren 43, 44 ferner dafür vorgesehen bzw. eingerichtet, entgegengesetzte, ggf. auch gegengleiche, Schwingungsbewegungen der Rohre 112, 122 zu erfasssen und in das (nämliche Schwingungsbewegungen jeweils repräsentierende) jeweilige Schwingungsmeßsignal s43, s44 zu wandeln; dies im besonderen in der Weise, daß jeder der Schwingungssensoren 41, 42 die Schwingungsbewegungen der beiden Rohr 111, 121 differenziell erfaßt, nämlich lediglich entgegengesetzte Schwingungsbewegungen nämlicher Rohre 111, 121 in das jeweilige Schwingungsmeßsignal wandelt, und jeder der Schwingungssensoren 43, 44 die Schwingungsbewegungen der beiden Rohr 112, 122 differenziell erfaßt, nämlich lediglich entgegengesetzte Schwingungsbewegungen nämlicher Rohre 112, 122 in das jeweilige Schwingungsmeßsignal wandelt. Zur Verringerung der Anzahl an benötigten Verbindungsleitungen zur Meß- und Betriebselektronik ME können die beiden Schwingungssensoren 41, 43 elektrisch in Serie geschaltet sein, derart, daß die beiden Schwingungsmeßsignale s41, s43 einander überlagern, und/oder können die beiden Schwingungssensoren 42, 44 elektrisch in Serie geschaltet sein, derart, daß die beiden Schwingungsmeßsignale s42, s44 einander überlagern.

Neben dem Meßwandler MW umfaßt das erfindungsgemäße Meßsystem ferner eine sowohl mit der vorbezeichneten Erregeranordnung des Meßwandlers als auch mit der vorbezeichneten Sensoranordnung des Meßwandlers elektrisch gekoppelte Meß- und Betriebselektronik ME. Nämliche Meß- und Betriebselektronik ME kann beispielsweise mittels wenigstens eines Mikroprozessors und/oder mittels wenigstens eines digitalen Signalprozessors gebildete und/oder sowohl mit Erregeranordnung 30 als auch der Sensoranordnung jeweils mittels elektrischer Verbindungsleitungen elektrisch gekoppelt sein. Darüberhinaus kann die Meß- und Betriebselektronik ME, wie auch in Fig. 1, 2A und 2B bzw. 4, 5A, 5B, jeweils angedeutet, in einem, insb. explosions- bzw. druckfesten und/oder die Meß- und Betriebselektronik ME gegen Spritzwasser schützendes, Elektronik-Schutzgehäuse 100 untergebracht sein. Nach einer weiteren Ausgestaltung der Erfindung ist die Meß- und Betriebselektronik eingerichtet, wie auch in Fig. 3B bzw. 6B angedeutet, zumindest zeitweise ein elektrisches erstes Treibersignal e31 zu generieren und damit elektrische Leistung in die Erregeranordnung einzuspeisen, derart, daß sowohl das Rohr 111 als auch das Rohr 121 jeweils zumindest anteilig Nutzschwingungen, nämlich erzwungene mechanische Schwingungen mit einer ersten Nutzfrequenz, nämlich einer durch das Treibersignal e31 vorgegebenen Schwingungsfrequenz ausführt. Darüberhinaus ist die Meß- und Betriebselektronik ferner eingerichtet, zumindest zeitweise - beispielsweise auch zeitgleich mit dem Treibersignal e31 - ein elektrisches zweites Treibersignal e32 zu generieren und damit elektrische Leistung in die Erregeranordnung einzuspeisen, derart, daß sowohl das Rohr 112 als auch das Rohr 122 - beispielsweise auch zeitgleich mit den anderen beiden Rohren 111, 121 - jeweils zumindest anteilig Nutzschwingungen, nämlich erzwungene mechanische Schwingungen mit wenigstens einer, beispielsweise von der ersten Nutzfrequenz abweichenden, zweiten Nutzfrequenz, nämlich einer durch das elektrische Treibersignal e32 vorgegebenen Schwingungsfrequenz ausführt. Die vorbezeichnete erste Nutzfrequenz kann beispielsweise einer von der Dichte des in der Rohranordnung geführten Fluid FL1 abhängigen ersten Resonanzfrequenz der Rohranordnung - beispielsweise nämlich einer niedrigsten gemeinsamen Resonanzfrequenz eines mittels der Rohre 111, 121 gebildeten ersten Rohrpaares - entsprechen und die vorbezeichnete zweite Nutzfrequenz kann beispielsweise einer von der Dichte des in der Rohranordnung geführten Fluid FL1 abhängigen, ggf. auch von der ersten Resonanzfrequenz abweichenden, zweiten Resonanzfrequenz der Rohranordnung - beispielsweise nämlich einer niedrigsten gemeinsamen Resonanzfrequenz eines mittels der Rohre 112, 122 gebildeten zweiten Rohrpaares - entsprechen. Zudem kann die Meß- und Betriebselektronik auch dafür vorgesehen bzw. eingerichtet sein, die vorbezeichneten Schwingungsmeßsignale s41, s42, s43, s44 zu empfangen und auszuwerten, nämlich anhand von deren vorbezeichneter ersten Phasendifferenz und/oder anhand von deren vorbezeichneter zweiten Phasendifferenz die Massendurchflußrate des Fluids FL1 repräsentierende Massendurchfluß-Meßwerte zu generieren und/oder anhand wenigstens einer Signalfrequenz wenigstens eines der Schwingungsmeßsignale s41, s42, s43, s44, beispielsweise nämlich anhand einer der vorbezeichneten ersten Nutzfrequenz entsprechenden Signalfrequenz wenigstens eines der Schwingungsmeßsignale s41, s42 und/oder anhand einer der vorbezeichneten zweiten Nutzfrequenz entsprechenden Signalfrequenz wenigstens eines der Schwingungsmeßsignale s43, s44, die Dichte des Fluids FL1 repräsentierende Dichte-Meßwerte zu generieren. Alternativ oder in Ergänzung kann die Meß- und Betriebselektronik auch dafür vorgesehen bzw. eingerichtet sein, anhand wenigstens eines der Schwingungsmeßsignale s41, s42, s43, s44, und/oder wenigstens eines der vorbezeichneten Treibersignale e31, e32 die Viskosität des Fluids FL1 repräsentierende Viskositäts-Meßwerte zu generieren

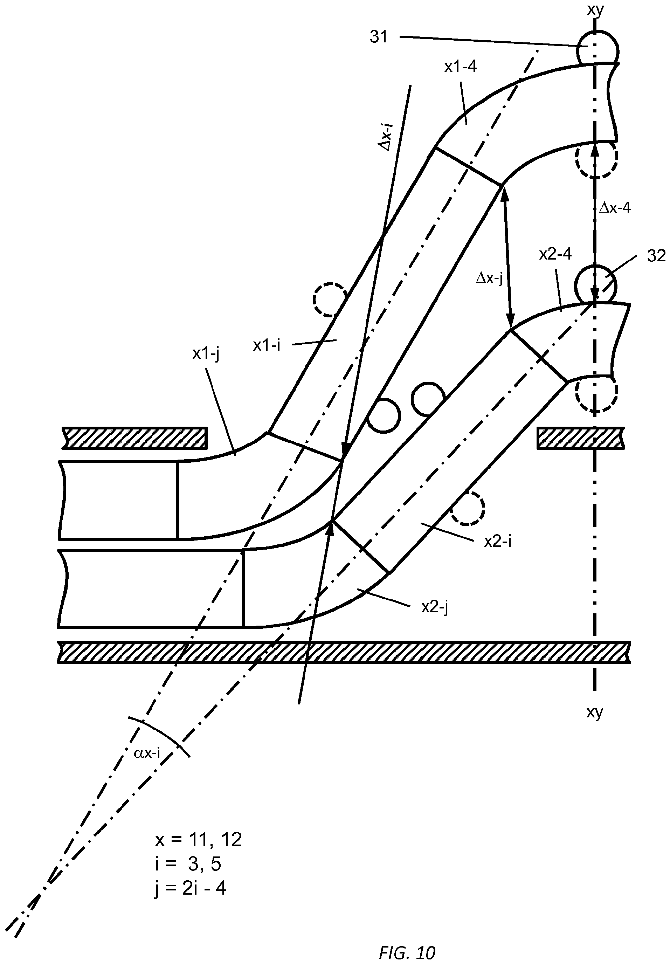

Bei dem erfindungsgemäßen Meßwandler (bzw. dem damit gebildeten Meßsystem) weist - wie auch in Fig. 7A, 7B und 10 schematisch dargestellt bzw. aus deren Zusammenschau ohne weiteres ersichtlich - jedes der Rohre 111, 112, 121, 122 der Rohranordnung im besonderen jeweils wenigstens ein mit dem Strömungsteiler 21, beispielsweise stoff- und/oder kraft- und/oder formschlüssig, verbundenes gerades, beispielsweise nämlich hohlzylindrisches, erstes Teilsegment 111-1, 121-1, 112-1 bzw. 122-1, ein an nämliches erstes Teilsegment 111-1, 121-1, 112-1 bzw. 122-1 anschließendes bogenförmiges, beispielsweise nämlich kreisbogenförmiges, zweites Teilsegment 111-2, 121-2, 112-2 bzw. 122-2, ein an nämliches zweites Teilsegment 111-2, 121-2, 112-2 bzw. 122-2 anschließendes gerades, beispielsweise nämlich hohlzylindrisches, drittes Teilsegment 111-3, 121-3, 112-3 bzw. 122-3, ein an nämliches drittes Teilsegment 111-3, 121-3, 112-3 bzw. 122-3 anschließendes bogenförmiges, beispielsweise nämlich kreisbogenförmiges, viertes Teilsegment 111-4, 121-4, 112-4 bzw. 122-4, ein an nämliches viertes Teilsegment 111-4, 121-4, 112-4 bzw. 122-4 anschließendes gerades, beispielsweise zum jeweiligen dritten Teilsegment 111-3, 121-3, 112-3 bzw. 122-3 baugleiches und/oder hohlzylindrisches, fünftes Teilsegment 111-5, 121-5, 112-5, 122-5, ein an nämliches fünftes Teilsegment 111-5, 121-5, 112-5 bzw. 122-5 anschließendes bogenförmiges, beispielsweise zum jeweiligen zweiten Teilsegment 111-2, 121-2, 112-2 bzw. 122-2 baugleiches und/oder kreisbogenförmiges, sechstes Teilsegment 111-6, 121-6, 112-6 bzw. 122-6 sowie ein sowohl an nämliches sechstes Teilsegment 111-6, 121-6, 112-6 bzw. 122-6 anschließendes als auch mit dem Strömungsteiler 22, beispielsweise stoff- und/oder kraft- und/oder formschlüssig, verbundenes bogenförmiges, beispielsweise zum jeweiligen ersten Teilsegment 111-1, 121-1, 112-1 bzw. 122-1 baugleiches und/oder hohlzylindrisches, siebentes Teilsegment 111-7, 121-7, 112-7 bzw. 122-7 auf. Für den vorbezeichneten Fall, daß die Rohranordnung sowohl die Symmetrieebene yz als auch die dazu senkrechte Symmetrieebene xy aufweist ist nach einer weiteren Ausgestaltung der Erfindung ferner vorgesehen, daß nämliche Symmetrieebene xy - wie auch aus einer Zusammenschau der Fig. 7A, 7B und 10 ohne weiteres ersichtlich - jedes der Rohre jeweils in dessen jeweiligen viertem Teilsegment 111-4, 121-4, 112-4 bzw. 122-4 imaginär schneidet. Nach einer weiteren Ausgestaltung der Erfindung weist jedes der Rohre, wie auch in Fig. 9B angedeutet bzw. auch aus einer Zusammenschau der Fig. 7A, 7B, 9A und 9B ohne weiteres ersichtlich, jeweils eine Rohrbogenhöhe h111, h121, h112, h122, gemessen innerhalb der vorbezeichneten Symmetrieebene xy als ein kleinster Abstand des jeweiligen vierten Teilsegments 111-4, 121-4, 112-4 bzw. 122-4 zur zugehörigen, nämlich dessen jeweilige ersten und zweiten Ende imaginär verbindenden gedachten Verbindungsachse z1, z2, z3 bzw. z4 auf, welche Rohrbogenhöhe jeweils so gewählt ist, daß jedes der Rohre 111, 121, 112, 122 jeweils ein Rohrlänge-zu-Rohrbogenhöhe-Verhältnis, gemessen als ein Quotient der Rohrlänge des jeweiligen Rohrs zur jeweiligen Rohrbogenhöhe, aufweist, das größer als 2 (2:1), beispielsweise größer als 2,5 (2,5:1), und kleiner als 4 (4:1), beispielsweise kleiner als 3 (3:1), ist, und/oder daß jedes der Rohre 111, 121, 112, 122 jeweils ein Kaliber-zu-Rohrbogenhöhe-Verhältnis, gemessen als ein Quotient des Kalibers des jeweiligen Rohrs zur jeweiligen Rohrbogenhöhe aufweist, das größer als 0,1, beispielsweise auch kleiner als 0,2 ist.

Für den Fall, daß die Sensoranordnung mittels der vorbezeichneten vier Schwingungssensoren 41, 42, 43, 44 gebildet ist, kann beispielsweise - wie auch aus Fig. 7A, 7B bzw. 10 bzw. deren Zusammenschau ersichtlich - der Schwingungssensor 41 sowohl vom Teilsegment 111-2 als auch vom Teilsegment 111-4 beabstandet am Teilsegment 111-3 des Rohrs 111 sowie sowohl vom Teilsegment 121-2 als auch vom Teilsegment 121-4 beabstandet am Teilsegment 121-3 des Rohrs 121, der Schwingungssensor 42 sowohl vom Teilsegment 111-6 als auch vom Teilsegment 111-4 beabstandet am Teilsegment 111-5 des Rohrs 111 sowie sowohl vom Teilsegment 121-6 als auch vom Teilsegment 121-4 beabstandet am Teilsegment 121-5 des Rohrs 121, der Schwingungssensor 43 sowohl vom Teilsegment 112-2 als auch vom Teilsegment 112-4 beabstandet am Teilsegment 112-3 des Rohrs 112 sowie sowohl vom Teilsegment 122-2 als auch vom Teilsegment 122-4 beabstandet am Teilsegment 122-3 des Rohrs 122 bzw. der Schwingungssensor 44 sowohl vom Teilsegment 112-6 als auch vom Teilsegment 112-4 beabstandet am Teilsegment 112-5 des Rohrs 112 sowie sowohl vom Teilsegment 121-6 als auch vom Teilsegment 122-4 beabstandet am Teilsegment 122-5 des Rohrs 122 angebracht sein; dies beispielsweise auch derart, daß der Schwingungssensor 41 sowohl teilweise zwischen dem Teilsegment 111-3 und dem Teilsegment 112-3 als auch teilweise zwischen dem Teilsegment 121-3 und dem Teilsegment 122-3 und der Schwingungssensor 42 sowohl teilweise zwischen dem Teilsegment 111-5 und dem Teilsegment 112-5 als auch teilweise zwischen dem Teilsegment 121-5 und dem Teilsegment 122-5 positioniert ist und/oder daß der Schwingungssensor 43 sowohl teilweise zwischen dem Teilsegment 111-3 und dem Teilsegment 112-3 als auch teilweise zwischen dem Teilsegment 121-3 und dem Teilsegment 122-3 und der Schwingungssensor 44 sowohl teilweise zwischen dem Teilsegment 111-5 und dem Teilsegment 112-5 als auch teilweise zwischen dem Teilsegment 121-5 und dem Teilsegment 122-5 positioniert ist. Zudem können die Schwingungssensoren 41, 42 sowohl jeweils gleichweit vom Teilsegment 111-4 als auch jeweils gleichweit vom Teilsegment 121-4 beabstandet sein und/oder können die Schwingungssensoren 43, 44 sowohl jeweils gleichweit vom Teilsegment 112-4 als auch jeweils gleichweit vom Teilsegment 122-4 beabstandet sein. Für den anderen erwähnten Fall, daß die Erregeranordnung mittels der vorbezeichneten zwei Schwingungserreger 31, 32 gebildet ist, kann beispielsweise - wie auch aus Fig. 7A, 7B bzw. 10 bzw. deren Zusammenschau ersichtlich - der Schwingungserreger 31 sowohl vom Teilsegment 111-3 als auch vom Teilsegment 111-5 beabstandet am Teilsegment 111-4 des Rohrs 111 sowie sowohl vom Teilsegment 121-3 als auch vom Teilsegment 121-5 beabstandet am Teilsegment 121-4 des Rohrs 121-4 angebracht sein und kann der Schwingungserreger 32 sowohl vom Teilsegment 112-3 als auch vom Teilsegment 112-5 beabstandet am Teilsegment 112-4 des Rohrs 112 sowie sowohl vom Teilsegment 122-3 als auch vom Teilsegment 122-5 beabstandet am Teilsegment 122-4 des Rohrs 122 angebracht sein; dies beispielsweise auch derart, daß der Schwingungserreger 31 sowohl vom Teilsegment 111-3 und vom Teilsegment 111-5 des Rohrs 111 als auch vom Teilsegment 121-3 und vom Teilsegment 121-5 des Rohrs 121 jeweils gleichweit beabstandet ist und/oder daß der Schwingungserreger 32 sowohl vom Teilsegment 112-3 und vom Teilsegment 112-5 des Rohrs 112 als auch vom Teilsegment 122-3 und vom Teilsegment 122-5 des Rohrs 122 jeweils gleichweit beabstandet ist.

Beim erfindungsgemäßen Meßwandler sind die beiden Rohre 111, 112 ferner so ausgebildet und positioniert, daß - wie in Fig. 7A angedeutet - eine gedachte Längsachse des geraden Teilsegments 111-3 des Rohrs 111 sowie eine gedachte Längsachse des geraden Teilsegments 112-3 des Rohrs 112 (zumindest in Projektion auf die vorbezeichnete - hier auch der Zeichenebene der Fig. 7A entsprechende - gedachte Symmetrieebene yz der Rohranordnung) in Verlängerung einen ersten Schnittwinkel α11-3 und eine gedachte Längsachse des geraden Teilsegments 111-5 des Rohrs 111 sowie eine gedachte Längsachse des geraden Teilsegments 112-5 des Rohrs 112 (zumindest in Projektion auf die vorbezeichnete gedachte Symmetrieebene yz der Rohranordnung) in Verlängerung einen zweiten Schnittwinkel α11-5 einschließen. Gleichermaßen sind auch die beiden anderen beiden Rohre 121, 122 so ausgebildet, daß - wie in Fig. 7B angedeutet - eine gedachte Längsachse des Teilsegments 121-3 des Rohrs 121 sowie eine gedachte Längsachse des Teilsegments 122-3 des Rohrs 122 (zumindest in Projektion auf die vorbezeichnete - hier auch der Zeichenebene der Fig. 7B entsprechende - gedachte Symmetrieebene yz der Rohranordnung) in Verlängerung einen zweiten Schnittwinkel α12-3 und eine gedachte Längsachse des Teilsegments 121-5 des Rohrs 121 und eine gedachte Längsachse des Teilsegments 122-5 des Rohrs 122 (zumindest in Projektion auf die vorbezeichnete gedachte Symmetrieebene yz der Rohranordnung) in Verlängerung einen vierten Schnittwinkel α12-5 einschließen. Jeder der vorbezeichneten Schnittwinkel α11-3, α11-5, α12-3, α12-5 ist spitzwinklig, nämlich größer als 0° und kleiner als 90°. Zumindest die beiden Schnittwinkel α11-3, α11-5 können beispielsweise auch gleich groß sein. Alternativ oder in Ergänzung können auch die beiden Schnittwinkel α12-3, α12-5 gleich groß sein. Erfindungsgemäß ist ferner vorgesehen, daß jeder der vorbezeichneten Schnittwinkel α11-3, α11-5, α12-3 und α12-5 jeweils größer als 0,1° - beispielsweise nämlich nicht kleiner als 0,2° - und kleiner als 10° - beispielsweise nämlich nicht größer als 5° - ist.

Wie aus einer Zusammenschau der Fig. 7A, 7B und 10 ohne weiteres ersichtlich sind bei dem erfindungsgemäßen Meßwandler die Rohre 111, 121, 112, 122 zudem so ausgebildet und angeordnet, daß ein kleinster Abstand Δ11-4 zwischen dem bogenförmigen Teilsegment 111-4 des Rohrs 111 und dem bogenförmigen Teilsegment 112-4 des Rohrs 112 sowohl größer als ein kleinster Abstand Δ11-3 zwischen dem geraden Teilsegment 111-3 des Rohrs 111 und dem bogenförmigen Teilsegment 112-2 des Rohrs 112 als auch größer als ein kleinster Abstand Δ11-5 zwischen dem geraden Teilsegment 111-5 des Rohrs 111 und dem bogenförmigen Teilsegment 112-6 des Rohrs 112 und ist gleichermaßen auch ein kleinster Abstand Δ12-4 zwischen dem bogenförmigen Teilsegment 121-4 des Rohrs 121 und dem bogenförmigen Teilsegment 122-4 des Rohrs 122 sowohl größer als ein kleinster Abstand Δ12-3 zwischen dem geraden Teilsegment 121-3 des Rohrs 121 und dem bogenförmigen Teilsegment 122-2 des Rohrs 122 als auch größer als ein kleinster Abstand Δ12-5 zwischen dem geraden Teilsegment 121-5 des Rohrs 121 und dem bogenförmigen Teilsegment 122-6 des Rohrs 122; dies beispielsweise auch derart, daß der Schwingungserreger 31 - wie auch in Fig. 10 angedeutet - sowohl teilweise zwischen dem Teilsegment 111-4 des Rohrs 111 und dem Teilsegment 112-4 als auch teilweise zwischen dem Teilsegment 121-4 und dem Teilsegment 122-4 positioniert werden kann und/oder daß der Schwingungserreger 32 - wie auch in Fig. 7A, 7B oder Fig. 10 jeweils angedeutet- sowohl teilweise zwischen dem Teilsegment 111-4 und dem Teilsegment 112-4 als auch teilweise zwischen dem Teilsegment-121-4 und dem Teilsegment 122-4 positioniert werden kann.

Nach einer weiteren Ausgestaltung der Erfindung sind die Rohre der Rohranordnung so ausgebildet und angeordnet, daß der vorbezeichnete, beispielsweise weniger als 50 mm betragende, kleinste Abstand Δ11-3 zwischen dem Teilsegment 111-3 des Rohrs 111 und dem Teilsegment 112-2 des Rohrs 112 und der vorbezeichnete, beispielsweise weniger als 50 mm betragende, kleinste Abstand Δ11-5 zwischen dem Teilsegment 111-5 des Rohrs 111 und dem Teilsegment 112-6 des Rohrs 112 gleich groß sind bzw. daß der vorbezeichnete kleinste Abstand Δ12-3 zwischen dem Teilsegment 121-3 des Rohrs 121 und dem Teilsegment 122-2 des Rohrs 122 und der vorbezeichnete kleinste Abstand Δ12-5 zwischen dem Teilsegment 121-5 des Rohrs 121 und dem Teilsegment 122-6 des Rohrs 122 gleich groß sind. Alternativ oder in Ergänzung können die Rohre 111, 121, 112, 122 - wie auch in Fig. 10 angedeutet - zudem so ausgebildet und angeordnet sein, daß sowohl ein kleinster Abstand Δ11-2 zwischen dem bogenförmigen Teilsegment 111-4 des Rohrs 111 und dem geraden Teilsegment 112-3 des Rohrs 112 (bzw. zwischen dem bogenförmigen Teilsegment 112-4 des Rohrs 112 und dem geraden Teilsegment 111-3 des Rohrs 111) größer als der vorbezeichnete kleinste Abstand Δ11-3 ist als auch ein kleinster Abstand Δ11-6 zwischen dem bogenförmigen Teilsegment 111-4 des Rohrs 111 und dem geraden Teilsegment 112-5 des Rohrs 112 (bzw. zwischen dem bogenförmigen Teilsegment 112-4 des Rohrs 112 und dem geraden Teilsegment 111-5 des Rohrs 111) größer als der vorbezeichnete kleinste Abstand Δ11-5 ist und daß gleichermaßen sowohl ein kleinster Abstand Δ12-2 zwischen dem bogenförmigen Teilsegment 121-4 des Rohrs 121 und dem geraden Teilsegment 122-3 des Rohrs 122 (bzw. zwischen dem bogenförmigen Teilsegment 122-4 des Rohrs 122 und dem geraden Teilsegment 121-3 des Rohrs 121) größer als der vorbezeichnete kleinste Abstand Δ12-3 ist als auch ein kleinster Abstand Δ12-6 zwischen dem bogenförmigen Teilsegment 121-4 des Rohrs 121 und dem geraden Teilsegment 112-5 des Rohrs 112 (bzw. zwischen dem bogenförmigen Teilsegment 112-4 des Rohrs 122 und dem geraden Teilsegment 121-5 des Rohrs 121) größer als der vorbezeichnete kleinste Abstand Δ12-5 ist. Nach einer weiteren Ausgestaltung der Erfindung ist ferner vorgesehen, daß der vorbezeichnete kleinste Abstand Δ11-4 weniger beträgt als ein 10-faches des vorbezeichneten kleinsten Abstands Δ11-3 bzw. des vorbezeichneten kleinsten Abstands Δ11-5 und/oder weniger beträgt als eine Summe eines Kalibers des Rohrs 111 und eines Kalibers des Rohrs 112 bzw. daß der vorbezeichnete kleinste Abstand Δ12-4 weniger beträgt als ein 10-faches des vorbezeichneten kleinsten Abstands Δ12-3 bzw. des vorbezeichneten kleinsten Abstands Δ12-5 und/oder weniger beträgt als eine Summe eines Kalibers des Rohrs 121 und eines Kalibers des Rohrs 122.

Zum Schutz der Rohre der Rohranordnung sowie weiterer daran angebrachter Komponenten des Meßwandlers - nicht zuletzt den vorbezeichneten Schwingungserregern 31, 32 bzw. Schwingungssensoren 41, 42, 43 44 - vor schädlichen Umwelteinflüssen, zur Vermeidung von unerwünschten Schallemissionen durch die vibrierenden Rohre oder auch zum Auffangen von aus einer leckgeschlagenen Rohranordnung ausgetretenem Fluid umfaßt der Meßwandler, wie auch bei Meßwandler der in Rede stehenden Art bzw. damit gebildeten Meßsystemen durchaus üblich, nach einer weiteren Ausgestaltung der Erfindung ein die Rohre 111, 121, 112, 122 der Rohranordnung umhüllendes Wandlergehäuse 200. Nämliches Wandlergehäuse 200 weist zumindest eine, beispielsweise auch hermetisch geschlossene, Kavität 200* auf, innerhalb der - wie auch aus einer Zusammenschau der Fig.1, 2A, 2B, 3A und 3B bzw. 4, 2A, 5B, 6A und 6B ersichtlich - jedes der Rohre 111, 121, 112, 122 der Rohranordnung angeordnet ist. Das Wandlergehäuse kann beispielsweise eine Druckfestigkeit aufweisen, die größer als eine größte Druckfestigkeit der Rohre der Rohranordnung ist und/oder die mehr als 50 bar beträgt.

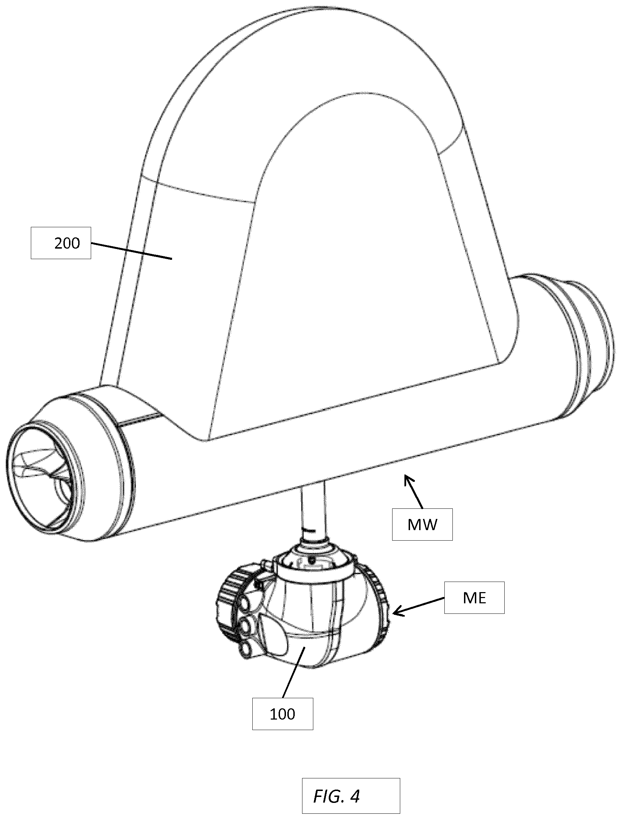

Bei den in der Fig. 1, 2A, 2B, 3A, 3B, 4, 2A, 5B, 6A und 6B gezeigten Ausführungsbeispielen umfaßt das Wandlergehäuse 200 ein sich von einem ersten Ende bis zu einem zweiten Ende mit einer Tragelementlänge erstreckendes Tragelement 200-1, wobei das Tragelement 200-1 an dessen ersten Ende mit dem ersten Strömungsteiler und mit an dessen zweiten Ende mit dem zweiten Strömungsteiler mechanisch, insb. stoffschlüssig, verbunden ist. Nämliches Tragelement 200-1 weist wenigstens einen von einer, beispielsweise metallischen, Wandung umhüllten, einen Teilbereich der vorbezeichneten Kavität 200* des Wandlergehäuses 200 bildenden Hohlraum 200*-1 auf und kann beispielsweise im wesentlichen zylindrisch, ggf. auch zumindest abschnittsweise hohlzylindrisch, bzw. röhrenförmig ausgebildet sein. Die Wandung des Tragelements 200-1 kann beispielsweise aus einem Stahl, beispielsweise nämlich einem Edelstahl oder einem Baustahl, und/oder aus dem gleichem Material wie die Wandung der Rohre 111, 121, 112, 122 bestehen. Das Tragelement kann u.a. dazu dienen, im Betrieb des Meßsystems via angeschlossener Prozeßleitung in den Meßwandler eingeleiteten mechanischen Kräften und/oder Momenten aufzunehmen, insb. derart, daß von nämlichen Kräften und/oder Momenten keine oder nur sehr geringe, nämlich für die angestrebte Meßgenauigkeit des Meßsystems vernachlässigbare Anteile auf die innerhalb des Wandlergehäuses angeordnete Rohranordnung übertragen werden. Neben dem Tragelement weist das Wandlergehäuse 200 bei den hier gezeigten Ausführungsbeispielen ferner ein Hüllelement 200-2 auf, das mit dem Tragelement 200-1 des Wandlergehäuses mechanisch, beispielsweise nämlich stoffschlüssig, verbunden ist. Nämliches Hüllelement 200-2 kann, wie auch aus einer Zusammenschau der Fig. 1, 2A, 3A und 3B ersichtlich, beispielsweise röhrenförmig ausgebildet sein, derart das es einen von einer Wandung umhüllten, einen Teilbereich der vorbezeichneten Kavität 200* bildenden, insb. teilweise kreiszylindrischen, Hohlraum 200*-2 aufweist. Alternativ dazu kann das Hüllelement 200-2, wie auch aus einer Zusammenschau der Fig. 4, 5A, 6A und 6B ersichtlich, beispielsweise auch kappenförmig ausgebildet sein, derart, daß eine Wandung des Hüllelements zusammen mit einem Segment der Wandung des Trägerelements den vorbezeichneten Hohlraum 200*-2 bilden bzw. umhüllen. Wie auch aus den Fign. 3A, 3B bzw. 6A, 6B ersichtlich sind das Wandlegehäuse und die Rohranordnugn ferner so ausgebildet, daß jedes der Rohre 111, 121, 112, 122 der Rohranordnung lediglich teilweise innerhalb des Hohlraums 200*-1 des Tragelements 200-1 bzw. jedes der Rohre 111, 121, 112, 122 lediglich teilweise innerhalb des Hohlraums 200*-2 des Hüllelements 200-2 angeordnet ist; dies - wie aus den Fign. 3A, 3B bzw. 6A, 6B ohne weiteres ersichtlich - beispielsweise auch derart, daß jedes der Teilsegmente 111-4, 121-4, 112-4, 122-4 der Rohre ausschließlich innerhalb des Hohlraums 200*-2 des Hüllelements 200-2 angeordnet ist und/oder daß jedes der Teilsegmente 111-3, 121-3, 112-3, 122-3, 111-5, 121-5, 112-5, 122-5 der Rohre zumindest überwiegend innerhalb des Hohlraums 200*-2 des Hüllelements 200-2 angeordnet ist und/oder daß jedes der Teilsegmente 111-2, 121-2, 112-2, 122-2, 111-6, 121-6, 112-6, 122-6 der Rohre zumindest überwiegend außerhalb des Hohlraums 200*-2 des Hüllelements 200-2 angeordnet ist bzw. daß umgekehrt jedes der zweiten Teilsegmente 111-2, 121-2, 112-2, 122-2, 111-6, 121-6, 112-6, 122-6 der Rohre zumindest überwiegend innerhalb des Hohlraums 200*-1 des Tragelements 200-1 angeordnet ist und/oder daß jedes der Teilsegmente1 11-3, 121-3, 112-3, 122-3, 111-5, 121-5, 112-5, 122-5 der Rohre zumindest überwiegend außerhalb des Hohlraums 200*-1 des Tragelements 200-1 angeordnet ist. Zum seitlichen Hindurchführen der Rohre 111, 121, 112, 122 durch das Tragelement 200-1 weist dessen Wandung nach einer weiteren Ausgestaltung der Erfindung eine erste Öffnung 200-1 a sowie wenigstens eine von nämlicher Öffnung 200-1a entlang einer gedachten Mantellinie der Wandung beabstandete zweite Öffnung 200-1b auf. Wie aus den Fign. 3A, 3B bzw. 6A, 6B ohne weiteres ersichtlich, bildet jede der beiden Öffnungen 200-1a, 200-1b jeweils einen Teilbereich der vorbezeichneten Kavität 200* des Wandlergehäuses 200. Zudem erstreckt sich jedes der Rohre 111, 121, 112, 122 der Rohranordnung jeweils sowohl durch die Öffnung 200-1a als auch durch die Öffnung 200-1b.

Zwecks der Vermeidung von für die Messung schädlichen Kontakten der vibrierenden Rohre untereinander oder mit dem des Wandlergehäuse weist jedes der Rohre 111, 121, 112, 122 lediglich solche Abstände zu den jeweils anderen Rohren wie auch zum Wandlergehäuse 200, nicht zuletzt auch zu einem jeweiligen Rand jeder der beiden vorbezeichneten Öffnungen 200-1a, 200-1b in der Wandung des Tragelements 200-1, auf, die jeweils unter allen Betriebsbedingungen freie Schwingungen mit für die Messung ausreichender Schwingungsamplitude ermöglichen. Nach einer Ausgestaltung der Erfindung weist daher jedes der Rohre 111, 121, 112, 122 der Rohranordnung jeweils einen kleinsten Abstand zum Wandlerghäuse 200 und/oder einen kleinsten Abstand zu jedem anderen der Rohre 111, 121, 112 bzw. 122 auf, der größer als 5 mm ist. Dementsprechend weist jedes der Rohre auch jeweils einen kleinsten Abstand zu einem Rand der Öffnung 200-1a bzw. jeweils einen kleinsten Abstand zu einem Rand der Öffnung 200-1b auf, der größer als 5 mm ist. Um anderseits auch einen möglichst kompakten Meßwandler bereitstellen zu können ist nach einer weiteren Ausgestaltung vorgesehen einen oder mehrere, ggf. auch jeden der vorbezeichneten kleinsten Abstände kleiner als 10 mm zu halten. Nach einer weiteren Ausgestaltung der Erfindung ist ferner vorgesehen, daß sowohl innerhalb der Öffnung 200-1a als auch innerhalb der Öffnung 200-1b, wie auch aus einer Zusammenschau der Fig. 3B, 6B und 10 ersichtlich, ein jeweiliger kleinster Abstand zwischen dem Rohr 111 und dem Rohr 112 jeweils kleiner ist als der vorbezeichnete kleinste Abstand zwischen dem Teilsegment 111-4 des Rohrs 111 und dem Teilsegment 112-4 des Rohrs 112 bzw. daß sowohl innerhalb der Öffnung 200-1a als auch innerhalb der Öffnung 200-1b ein jeweiliger kleinster Abstand zwischen dem Rohr 121 und dem Rohr 122 jeweils kleiner ist als der vorbezeichnete kleinste Abstand zwischen dem vierten Teilsegment 121-4 des Rohrs 121 und dem Teilsegment 122-4 des vierten Rohrs 122.

## Patentansprüche

1. Meßwandler für ein dem Messen wenigstens einer Meßgröße, insb. eine Massendurchflußrate und/oder eine Dichte und/oder eine Viskosität, eines strömenden Fluids dienlichen vibronisches Meßsystem, welcher Meßwandler umfaßt:
- eine Rohranordnung
-- mit einem gekrümmten, insb. zumindest abschnittsweise V-förmigen und/oder einstückigen, ersten Rohr (111),
-- mit einem dem ersten Rohr baugleichen gekrümmten zweiten Rohr (121),
-- mit einem gekrümmten, insb. zumindest abschnittsweise V-förmigen und/oder einstückigen, dritten Rohr (112),
-- mit einem lediglich dem dritten Rohr baugleichen vierten Rohr (122),
-- mit einem, insb. als Leitungsverzweigung dienlichen und/oder einlaßseitigen, ersten Strömungsteiler (21) mit, insb. genau, vier Strömungsöffnungen,
-- und mit einem, insb. dem ersten Strömungsteiler (21) baugleichen und/oder als Leitungsvereinigung dienlichen und/oder auslaßseitigen, zweiten Strömungsteiler (22) mit, insb. genau, vier Strömungsöffnungen;
- eine Erregeranordnung zum Anregen und Aufrechterhalten von mechanischen Schwingungen der Rohranordnung, insb. nämlich von Biegeschwingungen jedes der ersten, zweiten, dritten und vierten Rohre um eine jeweilige Ruhelage;
- sowie eine Sensoranordnung zum Erfassen von mechanischen Schwingungen der Rohranordnung, insb. nämlich von Biegeschwingungen jedes der ersten, zweiten, dritten und vierten Rohre um eine jeweilige Ruhelage, und zum Erzeugen von jeweils Schwingungsbewegungen eines oder mehrerer der ersten, zweiten, dritten und vierten Rohre repräsentierenden Schwingungsmeßsignalen;
- wobei jedes der ersten, zweiten, dritten und vierten Rohre sich jeweils von einem jeweiligen ersten Ende des jeweiligen Rohrs bis zu einem jeweiligen zweiten Ende nämlichen Rohrs mit einer jeweiligen Rohrlänge erstreckt und jeweils ein von einer, insb. metallischen, Rohrwandung umschlossenes, sich jeweils vom jeweiligen ersten Ende des jeweiligen Rohrs bis zum jeweiligen zweiten Ende nämlichen Rohrs erstreckenden Lumen aufweist,
-- wobei sowohl die Rohrlänge des ersten Rohrs als auch die Rohrlänge des zweiten Rohrs jeweils größer als die Rohrlänge des dritten Rohrs und jeweils größer als die Rohrlänge des vierten Rohrs ist
-- und wobei jedes der Rohre (111, 121, 112, 122) jeweils ein Rohrlänge-zu Kaliber-Verhältnis, gemessen als ein Quotient der jeweiligen Rohrlänge zum jeweiligen Kaliber, aufweist, das größer als 25 (25:1) ist;
- wobei jedes der ersten, zweiten, dritten und vierten Rohre jeweils an jeden der ersten und zweiten Strömungsteiler angeschlossen ist, derart, daß
-- das erste Rohr mit dessen ersten Ende in eine erste Strömungsöffnung des ersten Strömungsteilers (21) und mit dessen zweiten Ende in eine erste Strömungsöffnung des zweiten Strömungsteilers (22),
-- das zweite Rohr mit dessen ersten Ende in eine zweite Strömungsöffnung des ersten Strömungsteilers (21) und mit dessen zweiten Ende in eine zweite Strömungsöffnung des zweiten Strömungsteilers (22),
-- das dritte Rohr mit dessen ersten Ende in eine dritte Strömungsöffnung des ersten Strömungsteilers (21) und mit dessen zweiten Ende in eine dritte Strömungsöffnung des zweiten Strömungsteilers (22)
-- und das vierte Rohr mit dessen ersten Ende in eine vierte Strömungsöffnung des ersten Strömungsteilers (21) und mit dessen zweiten Ende in eine vierte Strömungsöffnung des zweiten Strömungsteilers (22) münden;
- wobei jedes der ersten, zweiten, dritten und vierten Rohre jeweils wenigstens
-- ein mit dem ersten Strömungsteiler, insb. stoff- und/oder kraft- und/oder formschlüssig, verbundenes gerades, insb. hohlzylindrisches, erstes Teilsegment (111-1; 121-1; 112-1; 122-1),
-- ein an nämliches erstes Teilsegment anschließendes bogenförmiges, insb. kreisbogenförmiges, zweites Teilsegment (111-2; 121-2; 112-2; 122-2),
-- ein an nämliches zweites Teilsegment anschließendes gerades, insb. hohlzylindrisches, drittes Teilsegment (111-3; 121-3; 112-3; 122-3),
-- ein an nämliches drittes Teilsegment anschließendes bogenförmiges, insb. kreisbogenförmiges, viertes Teilsegment (111-4; 121-4; 112-4; 122-4),
-- ein an nämliches viertes Teilsegment anschließendes gerades, insb. zum jeweiligen dritten Teilsegment baugleiches und/oder hohlzylindrisches, fünftes Teilsegment (111-5; 121-5; 112-5; 122-5),
-- ein an nämliches fünftes Teilsegment anschließendes bogenförmiges, insb. zum jeweiligen zweiten Teilsegment baugleiches und/oder kreisbogenförmiges, sechstes Teilsegment (111-6; 121-6; 112-6; 122-6)
-- sowie ein sowohl an nämliches sechstes Teilsegment anschließendes als auch mit dem zweiten Strömungsteiler, insb. stoff- und/oder kraft- und/oder formschlüssig, verbundenes zum ersten Teilsegment baugleiches und/oder hohlzylindrisches siebentes Teilsegment (111-7; 121-7; 112-7; 122-7) aufweist;
- wobei ein kleinster Abstand zwischen dem vierten Teilsegment (111-4) des ersten Rohrs und dem vierten Teilsegment (112-4) des dritten Rohrs
-- sowohl größer als ein kleinster Abstand (Δ11-2) zwischen dem dritten Teilsegment (111-3) des ersten Rohrs und dem zweiten Teilsegment (112-2) des dritten Rohrs
-- als auch größer als ein kleinster Abstand (Δ11-3) zwischen dem fünften Teilsegment (111-5) des ersten Rohrs und dem sechsten Teilsegment (112-6) des dritten Rohrs ist;
- wobei ein kleinster Abstand zwischen dem vierten Teilsegment (121-4) des zweiten Rohrs und dem vierten Teilsegment (122-4) des vierten Rohrs
-- sowohl größer als ein kleinster Abstand zwischen dem dritten Teilsegment (122-3) des zweiten Rohrs (122) und dem zweiten Teilsegment (122-2) des vierten Rohrs
-- als auch größer als ein kleinster Abstand zwischen dem fünften Teilsegment (121-5) des zweiten Rohrs und dem sechsten Teilsegment (122-6) des vierten Rohrs ist;
- wobei der kleinste Abstand zwischen dem vierten Teilsegment (111-4) des ersten Rohrs (111) und dem vierten Teilsegment (112-4) des dritten Rohrs (112) weniger beträgt als eine Summe eines Kalibers des ersten Rohrs (111) und eines Kalibers des dritten Rohrs (112) und der kleinste Abstand zwischen dem vierten Teilsegment (121-4) des zweiten Rohrs und dem vierten Teilsegment (122-4) des vierten Rohrs (122) weniger beträgt als eine Summe eines Kalibers des zweiten Rohrs (121) und eines Kalibers des vierten Rohrs (122);
- wobei eine gedachte Längsachse des dritten Teilsegments (111-2) des ersten Rohrs sowie eine gedachte Längsachse des dritten Teilsegments (112-2) des dritten Rohrs, insb. in einer Projektion auf eine erste gedachte Symmetrieebene der Rohranordnung, in Verlängerung einen ersten Schnittwinkel (α11-3) einschließen;
- wobei eine gedachte Längsachse des dritten Teilsegments (121-2) des zweiten Rohrs sowie eine gedachte Längsachse des dritten Teilsegments (122-2) des vierten Rohrs, insb. in einer Projektion auf eine erste gedachte Symmetrieebene der Rohranordnung, in Verlängerung einen zweiten Schnittwinkel (a12-3) einschließen;
- wobei eine gedachte Längsachse des fünften Teilsegments (111-4) des ersten Rohrs sowie eine gedachte Längsachse des fünften Teilsegments (112-4) des dritten Rohrs, insb. in einer Projektion auf eine erste gedachte Symmetrieebene der Rohranordnung, in Verlängerung einen dritten Schnittwinkel (α11-5) einschließen;
- und wobei eine gedachte Längsachse des fünften Teilsegments (121-4) des zweiten Rohrs und eine gedachte Längsachse des fünften Teilsegments (122-4) des vierten Rohrs, insb. in einer Projektion auf eine erste gedachte Symmetrieebene der Rohranordnung, in Verlängerung einen vierten Schnittwinkel (a12-5) einschließen;
- und wobei jeder der ersten, zweiten, dritten und vierten Schnittwinkel jeweils größer als 0,1° und kleiner als 10° ist;
- wobei der erste Schnittwinkel und der zweite Schnittwinkel gleich groß sind
- und wobei der dritte Schnittwinkel und der vierte Schnittwinkel gleich groß sind.

2. Meßwandler nach einem der vorherigen Ansprüche,
- wobei der kleinste Abstand zwischen dem dritten Teilsegment (111-3) des ersten Rohrs (111) und dem zweiten Teilsegment (112-2) des dritten Rohrs (112) und der kleinste Abstand zwischen dem fünften Teilsegment (111-5) des ersten Rohrs und dem sechsten Teilsegment (112-6) des dritten Rohrs (112) gleich groß sind und/oder jeweils weniger als 50 mm betragen; und/oder
- wobei der kleinste Abstand zwischen dem dritten Teilsegment (121-3) des zweiten Rohrs (121) und dem zweiten Teilsegment (122-2) des vierten Rohrs (122) und der kleinste Abstand zwischen dem fünften Teilsegment (121-5) des zweiten Rohrs (121) und dem sechsten Teilsegment (122-6) des vierten Rohrs (122) gleich groß sind und/oder jeweils weniger als 50 mm betragen; und/oder
- wobei der kleinste Abstand zwischen dem vierten Teilsegment (111-4) des ersten Rohrs (111) und dem vierten Teilsegment (112-4) des dritten Rohrs (112) weniger beträgt als ein 10-faches des kleinsten Abstands zwischen dem dritten Teilsegment (111-3) des ersten Rohrs (111) und dem zweiten Teilsegment (112-2) des dritten Rohrs (112); und/oder
- wobei der kleinste Abstand zwischen dem vierten Teilsegment (111-4) des ersten Rohrs und dem vierten Teilsegment (112-4) des dritten Rohrs weniger beträgt als ein 10-faches des kleinsten Abstands zwischen dem fünften Teilsegment (111-5) des ersten Rohrs (111) und dem sechsten Teilsegment (112-6) des dritten Rohrs; und/oder
- wobei jedes der ersten, zweiten, dritten und vierten Rohre jeweils eine erste gedachte Symmetrieebene sowie eine dazu senkrechte zweite gedachte Symmetrieebene aufweist, und wobei jedes der ersten, zweiten, dritten und vierten Rohre jeweils sowohl zur zugehörigen ersten Symmetrieebene als auch zur zugehörigen zweiten Symmetrieebene spiegelsymmetrisch ist; und/oder
- wobei die geraden dritten und fünften Teilsegmenten der ersten und zweiten Rohre nicht parallel zu den geraden dritten und fünften Teilsegmenten der dritten und vierten Rohre verlaufen.

3. Meßwandler nach einem der vorherigen Ansprüche,
- wobei die Rohranordnung eine sowohl zwischen dem ersten und zweiten Rohr als auch zwischen dem dritten und vierten Rohr verortete erste gedachte Symmetrieebene (yz) aufweist,
- und wobei die Rohranordnung zumindest bezüglich nämlicher ersten gedachten Symmetrieebene (yz) spiegelsymmetrisch ist.

4. Meßwandler nach dem vorherigen Anspruch,
- wobei das erste Rohr zur ersten gedachten Symmetrieebene der Rohranordnung einen kleinsten Abstand aufweist, der gleich einem kleinsten Abstand ist, den das dritte Rohr zur ersten gedachten Symmetrieebene der Rohranordnung aufweist; und/oder
- wobei das zweite Rohr zur ersten gedachten Symmetrieebene der Rohranordnung einen kleinsten Abstand aufweist, der gleich einem kleinsten Abstand ist, den das vierte Rohr zur ersten gedachten Symmetrieebene der Rohranordnung aufweist; und/oder
- wobei jedes der ersten, zweiten, dritten und vierten Rohre zur ersten gedachten Symmetrieebene der Rohranordnung parallel ist; und/oder
- wobei die Rohranordnung eine zur ersten gedachten Symmetrieebene der Rohranordnung senkrechte, gleichwohl jedes der ersten, zweiten, dritten und vierten Rohre, insb. nämlich deren jeweiliges viertes Teilsegment, imaginär schneidende zweite gedachte Symmetrieebene (xy) der Rohranordnung aufweist und bezüglich nämlicher zweiten gedachten Symmetrieebene der Rohranordnung (xy) spiegelsymmetrisch ist.

5. Meßwandler nach einem der vorherigen Ansprüche, wobei die Rohranordnung eine erste gedachte Verbindungsachse, die einen Mittelpunkt der ersten Strömungsöffnung des ersten Strömungsteilers und einen Mittelpunkt der ersten Strömungsöffnung des zweiten Strömungsteilers imaginär miteinander verbindet, eine zweite gedachte Verbindungsachse, die einen Mittelpunkt der zweiten Strömungsöffnung des ersten Strömungsteilers und einen Mittelpunkt der zweiten Strömungsöffnung des zweiten Strömungsteilers imaginär miteinander verbindet, eine dritte gedachte Verbindungsachse, die einen Mittelpunkt der dritten Strömungsöffnung des ersten Strömungsteilers und einen Mittelpunkt der dritten Strömungsöffnung des zweiten Strömungsteilers imaginär miteinander verbindet sowie eine vierte gedachte Verbindungsachse, die einen Mittelpunkt der vierten Strömungsöffnung des ersten Strömungsteilers und einen Mittelpunkt der vierten Strömungsöffnung des zweiten Strömungsteilers imaginär miteinander verbindet, aufweist; insb. derart, daß jede gedachten Verbindungsachsen jeweils parallel zu jeder anderen nämlicher Verbindungsachsen verläuft.

6. Meßwandler nach Anspruch 4 und 5, wobei jedes der Rohre jeweils eine Rohrbogenhöhe, gemessen innerhalb der zweiten gedachten Symmetrieebene (xy) als ein kleinster Abstand des jeweiligen vierten Teilsegments zur zugehörigen, nämlich dessen jeweilige ersten und zweiten Ende imaginär verbindenden gedachten Verbindungsachse, aufweist, welche Rohrbogenhöhe so gewählt ist, daß jedes der Rohre jeweils ein Rohrlänge-zu-Rohrbogenhöhe-Verhältnis, gemessen als ein Quotient der Rohrlänge des jeweiligen Rohrs zur jeweiligen Rohrbogenhöhe, aufweist, das größer als 2 (2:1), insb. größer als 2,5 (2,5:1), und kleiner als 4 (4:1), insb. kleiner als 3 (3:1), ist, und/oder daß jedes der Rohre jeweils ein Kaliber-zu-Rohrbogenhöhe-Verhältnis, gemessen als ein Quotient des Kalibers des jeweiligen Rohrs zur jeweiligen Rohrbogenhöhe, aufweist, das größer als 0,1, insb. auch kleiner als 0,2 ist.

7. Meßwandler nach einem der vorherigen Ansprüche,
- wobei die Sensoranordnung einen - insb. elektrodynamischen - ersten Schwingungssensor, einen - insb. elektrodynamischen und/oder zum ersten Schwingungssensor baugleichen - zweiten Schwingungssensor, einen - insb. elektrodynamischen und/oder zum ersten Schwingungssensor baugleichen - dritten Schwingungssensor sowie wenigstens einen - insb. elektrodynamischen und/oder zum dritten Schwingungssensor baugleichen - vierten Schwingungssensor aufweist; und/oder
- wobei die Erregeranordnung einen, insb. elektrodynamischen, ersten Schwingungserreger sowie wenigstens einen, insb. elektrodynamischen und/oder zum ersten Schwingungserreger baugleichen, zweiten Schwingungserreger aufweist.

8. Meßwandler nach einem der vorherigen Ansprüche, weiters umfassend: ein die ersten, zweiten, dritten und vierten Rohre umhüllendes Wandlergehäuse, wobei das Wandlergehäuse zumindest eine, insb. hermetisch geschlossene, Kavität aufweist und wobei jedes der ersten, zweiten, dritten und vierten Rohre innerhalb nämlicher Kavität angeordnet ist.

9. Meßwandler nach dem vorherigen Anspruch, wobei das Wandlergehäuse ein, insb. zylindrisches und/oder röhrenförmiges und/oder zumindest abschnittsweise hohlzylindrisches, sich von einem ersten Ende bis zu einem zweiten Ende mit einer Tragelementlänge erstreckendes Tragelement aufweist, wobei das Tragelement an dessen ersten Ende mit dem ersten Strömungsteiler und mit an dessen zweiten Ende mit dem zweiten Strömungsteiler mechanisch, insb. stoffschlüssig, verbunden ist.

10. Meßwandler nach dem vorherigen Anspruch , wobei das Tragelement wenigstens einen von einer, insb. metallischen, Wandung umhüllten, einen Teilbereich der Kavität bildenden Hohlraum aufweist.

11. Meßwandler nach dem vorherigen Anspruch, wobei jedes der ersten, zweiten, dritten und vierten Rohre lediglich teilweise innerhalb des Hohlraums des Tragelements angeordnet ist, insb. derart, daß jedes der zweiten Teilsegmente jedes der ersten, zweiten, dritten und vierten Rohre zumindest überwiegend innerhalb des Hohlraums des Tragelements angeordnet ist und/oder und daß jedes der sechsten Teilsegmente jedes der ersten, zweiten, dritten und vierten Rohre zumindest überwiegend innerhalb des Hohlraums des Tragelements angeordnet ist und/oder daß jedes der dritten und fünften Teilsegmente jedes der ersten, zweiten, dritten und vierten Rohre zumindest überwiegend außerhalb des Hohlraums des Tragelements angeordnet ist.

12. Meßwandler nach dem vorherigen Anspruch,
- wobei die Wandung des Tragelements eine erste Öffnung sowie wenigstens eine von der ersten Öffnung entlang einer gedachten Mantellinie der Wandung beabstandete zweite Öffnung aufweist;
- wobei jede der ersten und zweiten Öffnungen jeweils einen Teilbereich der Kavität des Wandlergehäuses bildet;
- und wobei sich jedes der ersten, zweiten, dritten und vierten Rohre jeweils sowohl durch die erste Öffnung als auch durch die zweite Öffnung erstreckt.

13. Meßwandler nach dem vorherigen Anspruch,
- wobei sowohl innerhalb der ersten Öffnung als auch innerhalb der zweiten Öffnung ein jeweiliger kleinster Abstand zwischen dem ersten Rohr und dem dritten Rohr jeweils kleiner ist als der kleinste Abstand (11-1) zwischen dem vierten Teilsegment (11-3) des ersten Rohrs und dem vierten Teilsegment (13-3) des dritten Rohrs (13); und/oder
- wobei sowohl innerhalb der ersten Öffnung als auch innerhalb der zweiten Öffnung ein jeweiliger kleinster Abstand zwischen dem zweiten Rohr und dem vierten Rohr jeweils kleiner ist als der kleinste Abstand (I1-1) zwischen dem vierten Teilsegment (12-3) des zweiten Rohrs und dem vierten Teilsegment (14-3) des vierten Rohrs (14); und/oder
- wobei jedes der ersten, zweiten, dritten und vierten Rohre jeweils einen kleinsten Abstand zu einem Rand der ersten Öffnung aufweist, und jeder der kleinsten Abstände Rand der ersten Öffnung größer als 5 mm und/oder kleiner als 10 mm ist; und/oder
- wobei jedes der ersten, zweiten, dritten und vierten Rohre jeweils einen kleinsten Abstand zu einem Rand der zweiten Öffnung aufweist, und jeder der kleinsten Abstände zum Rand der zweiten Öffnung größer als 5 mm und/oder kleiner als 10 mm ist.

14. Meßwandler nach einem der Ansprüche 9 bis 13, wobei das Wandlergehäuse ein, insb. kappenförmiges oder röhrenförmiges, Hüllelement aufweist, wobei das Hüllelement mit dem Tragelement mechanisch, insb. stoffschlüssig, verbunden ist.

15. Meßwandler nach Anspruch 14,
- wobei das Hüllelement einen von einer, insb. metallischen, Wandung umhüllten, einen Teilbereich der Kavität bildenden Hohlraum aufweist,
- und wobei jedes der ersten, zweiten, dritten und vierten Rohre lediglich teilweise innerhalb des Hohlraums des Hüllelements angeordnet ist, insb. derart, daß jedes der vierten Teilsegmente jedes der ersten, zweiten, dritten und vierten Rohre ausschließlich innerhalb des Hohlraums des Hüllelements angeordnet ist und/oder und daß jedes der dritten und fünften Teilsegmente jedes der ersten, zweiten, dritten und vierten Rohre zumindest überwiegend innerhalb des Hohlraums des Hüllelements angeordnet ist und/oder daß jedes der zweiten und sechsten Teilsegmente jedes der ersten, zweiten, dritten und vierten Rohre zumindest überwiegend außerhalb des Hohlraums des Hüllelements angeordnet ist.

16. Meßwandler nach Anspruch 14,
- wobei eine Wandung des Hüllelements zusammen mit einem Segment der Wandung des Trägerelements einen einen Teilbereich der Kavität bildenden Hohlraum (200*-2) umhüllen,
- und wobei jedes der ersten, zweiten, dritten und vierten Rohre lediglich teilweise innerhalb des Hohlraums des Hüllelements angeordnet ist, insb. derart, daß jedes der vierten Teilsegmente jedes der ersten, zweiten, dritten und vierten Rohre ausschließlich innerhalb nämlichen Hohlraums (200*-2) angeordnet ist und/oder daß jedes der dritten und fünften Teilsegmente jedes der ersten, zweiten, dritten und vierten Rohre zumindest überwiegend innerhalb des Hohlraums (200*-2) angeordnet ist und/oder daß jedes der zweiten und sechsten Teilsegmente jedes der ersten, zweiten, dritten und vierten Rohre zumindest überwiegend außerhalb des Hohlraums (200*-2) angeordnet ist.

17. Vibronisches Meßsystem zum Messen und/oder Überwachen wenigstens eines, insb. zeitlich veränderlichen, Strömungsparameters, insb. einer Massendurchflußrate, einer Volumendurchflußrate und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Fluids, insb. eines Gases, einer Flüssigkeit oder einer Dispersion, welches Meßsystem umfaßt:
- einen Meßwandler (MW) gemäß einem der vorherigen Ansprüche;
- sowie eine sowohl mit dessen Erregeranordnung (30) als auch mit dessen Sensoranordnung (40), insb. mittels elektrischer Verbindungsleitungen, elektrisch gekoppelte, insb. mittels wenigstens eines Mikroprozessors und/oder mittels wenigstens eines digitalen Signalprozessors gebildete, Meß- und Betriebselektronik (ME),
- wobei die Meß- und Betriebselektronik eingerichtet ist, den Meßwandler speisende und/oder steuernde Erregersignale (e31, e32) zu generieren; und/oder
- wobei die Meß- und Betriebselektronik eingerichtet ist, mittels des Meßwandlers (MW) generierte Schwingungssignale (s41, s42, s43, s44) zu empfangen und zu verarbeiten, insb. nämlich einen eine Massendurchflußrate, m, des Fluids repräsentierenden Massendurchfluß-Meßwert, und/oder einen den wenigstens einen Stoffparameter repräsentierenden Stoffparameterwert, insb. einen eine Dichte des Fluids repräsentierenden Dichte-Meßwert und/oder einen eine Viskosität des Fluids repräsentierenden Viskosität-Meßwert zu ermitteln.

## Claims

1. A measuring transformer for a vibronic measuring system that is used to measure at least one measured variable, in particular a mass flow rate and/or a density and/or a viscosity of a flowing fluid, wherein the measuring transformer comprises:
- a pipe arrangement
∘ with a curved first pipe (111) that is in particular V-shaped at least in sections and/or exhibits a single-piece construction,
∘ with a curved second pipe (121) that is identical in structure to the first pipe,
∘ with a curved third pipe (112) that is in particular V-shaped at least in sections and/or exhibits a single-piece construction,
∘ with a fourth pipe (122) that is identical in structure only to the third pipe,
∘ with a first flow divider (21), in particular serving as a line branching and/or on the inlet side, with precisely four flow openings,
∘ and with a second flow divider (22), in particular of identical structure to the first flow divider (21) and/or serving as a line junction and/or fitted on the outlet side, in particular with precisely four flow openings;
- an exciter arrangement for exciting and maintaining mechanical vibrations in the pipe arrangement, in particular namely bending vibrations of each of the first, second, third and fourth pipes, around a respective resting position;
- as well as a sensor arrangement for recording mechanical vibrations in the pipe arrangement, in particular namely bending vibrations of each of the first, second, third and fourth pipes around a respective resting position, as well as for generating measured vibration signals representing oscillatory movements of one or more of the first, second, third and fourth pipes;
- wherein each of the first, second, third and fourth pipes extends in each case from a first end of the respective pipe to a second end of said pipe with a respective pipe length and exhibits in each case a lumen surrounded by a, in particular metal, pipe wall and extending in each case from the first end of the respective pipe to the second end of said pipe,
∘ wherein both the pipe length of the first pipe and the pipe length of the second pipe is greater than the pipe length of the third pipe and also greater than the pipe length of the fourth pipe
∘ and wherein each of the pipes (111, 121, 112, 122) exhibits a pipe length to caliber ratio, measured as a quotient of the respective pipe length to the respective caliber, that is greater than 25 (25:1);
- wherein each of the first, second, third and fourth pipes is connected to each of the first and second flow dividers in such a way that
∘ the first pipe opens with its first end into a first flow opening of the first flow divider (21) and with its second end into a first flow opening of the second flow divider (22),
∘ the second pipe opens with its first end into a second flow opening of the first flow divider (21) and with its second end into a second flow opening of the second flow divider (22),
∘ the third pipe opens with its first end into a third flow opening of the first flow divider (21) and with its second end into a third flow opening of the second flow divider (22)
∘ and the fourth pipe opens with its first end into a fourth flow opening of the first flow divider (21) and with its second end into a fourth flow opening of the second flow divider (22);
- wherein each of the first, second, third and fourth pipes exhibits at least
∘ one first segment that is straight, in particular hollow cylindrical, and connects to the first flow divider, in particular with a bonded and/or frictional and/or positive-locking connection (111-1; 121-1; 112-1; 122-1),
∘ a second partial segment that is crescent-shaped, in particular exhibiting a circular arc shape, and connects to the first partial segment (111-2; 121-2; 112-2; 122-2),
∘ a third partial segment that is straight, in particular exhibiting a hollow cylindrical shape, and connects to the second partial segment (111-3; 121-3; 112-3; 122-3),
∘ a fourth partial segment that is crescent-shaped, in particular with a circular arc shape, and connects to the third partial segment (111-4; 121-4; 112-4; 122-4),
∘ a fifth partial segment that is straight, in particular identical in construction to the respective third partial segment and/or exhibiting a hollow cylindrical shape, and connects to the fourth partial segment (111-5; 121-5; 112-5; 122-5),
∘ a sixth partial segment that is crescent-shaped, in particular identical in construction to the respective second partial segment and/or exhibiting a circular arc shape, and connects to the fifth partial segment (111-6; 121-6; 112-6; 122-6)
∘ as well as a seventh partial segment that connects both to the sixth partial segment and to the second flow divider, in particular with a bonded and/or frictional and/or positive-locking connection, has an identical construction to the first partial segment and/or exhibits a hollow cylindrical shape (111-7; 121-7; 112-7; 122-7);
- wherein a smallest distance between the fourth partial segment (111-4) of the first pipe and the fourth partial segment (112-4) of the third pipe
∘ is both greater than a smallest distance (Δ111-2) between the third partial segment (111-3) of the first pipe and the second partial segment (112-2) of the third pipe
∘ and greater than a smallest distance (Δ111-3) between the fifth partial segment (111-5) of the first pipe and the sixth partial segment (112-6) of the third pipe;
- wherein a smallest distance between the fourth partial segment (121-4) of the second pipe and the fourth partial segment (122-4) of the fourth pipe
- is both greater than a smallest distance between the third partial segment (122-3) of the second pipe (122) and the second partial segment (122-2) of the fourth pipe
∘ and greater than a smallest distance between the fifth partial segment (121-5) of the second pipe and the sixth partial segment (122-6) of the fourth pipe;
- wherein the smallest distance between the fourth partial segment (111-4) of the first pipe (111) and the fourth partial segment (112-4) of the third pipe (112) is less than the sum of a caliber of the first pipe (111) and a caliber of the third pipe (112), and the smallest distance between the fourth partial segment (121-4) of the second pipe and the fourth partial segment (122-4) of the fourth pipe (122) is less than the sum of a caliber of the second pipe (121) and a caliber of the fourth pipe (122);
- wherein a notional longitudinal axis of the third partial segment (111-2) of the first pipe, as well as a notional longitudinal axis of the third partial segment (112-2) of the third pipe, in particular in a projection onto a first notional plane of symmetry of the pipe arrangement, exhibit a first angle of intersection (a11-3) when extended;
- wherein a notional longitudinal axis of the third partial segment (121-2) of the second pipe, as well as a notional longitudinal axis of the third partial segment (122-2) of the fourth pipe, in particular in a projection onto a first notional plane of symmetry of the pipe arrangement, exhibit a second angle of intersection (a12-3) when extended;
- wherein a notional longitudinal axis of the fifth partial segment (111-4) of the first pipe, as well as a notional longitudinal axis of the fifth partial segment (112-4) of the third pipe, in particular in a projection onto a first notional plane of symmetry of the pipe arrangement, exhibit a third angle of intersection (a11-5) when extended;
- and wherein a notional longitudinal axis of the fifth partial segment (121-4) of the second pipe, as well as a notional longitudinal axis of the fifth partial segment (122-4) of the fourth pipe, in particular in a projection onto a first notional plane of symmetry of the pipe arrangement, exhibit a fourth angle of intersection (a12-5) when extended;
- and wherein each of the first, second, third and fourth angles of intersection is greater than 0.1° and less than 10°;
- wherein the first angle of intersection and the second angle of intersection are of equal magnitude
- and wherein the third angle of intersection and the fourth angle of intersection are of equal magnitude.

2. A measuring transformer according to one of the preceding claims,
- wherein the smallest distance between the third partial segment (111-3) of the first pipe (111) and the second partial segment (112-2) of the third pipe (112), as well as the smallest distance between the fifth partial segment (111-5) of the first pipe and the sixth partial segment (112-6) of the third pipe (112) are the same and/or each measure less than 50 mm; and/or
- wherein the smallest distance between the third partial segment (121-3) of the second pipe (121) and the second partial segment (122-2) of the fourth pipe (122), as well as the smallest distance between the fifth partial segment (121-5121) of the second pipe and the sixth partial segment (122-6) of the third pipe (122) are the same and/or each measure less than 50 mm; and/or
- wherein the smallest distance between the fourth partial segment (111-4) of the first pipe (111) and the fourth partial segment (112-4) of the third pipe (112) is less than 10 times the smallest distance between the third partial segment (111-3) of the first pipe (111) and the second partial segment (112-2) of the third pipe (112); and/or
- wherein the smallest distance between the fourth partial segment (111-4) of the first pipe and the fourth partial segment (112-4) of the third pipe is less than 10 times the smallest distance between the fifth partial segment (111-5) of the first pipe (111) and the sixth partial segment (112-6) of the third pipe; and/or
- wherein each of the first, second, third and fourth pipes exhibits a first notional plane of symmetry, as well as a second notional plane of symmetry that runs vertically to this, and wherein each of the first, second, third and fourth pipes is symmetrically identical both to the accompanying first plane of symmetry and to the accompanying second plane of symmetry; and/or
- wherein the straight third and fifth partial segments of the first and second pipes do not run parallel to the straight third and fifth partial segments of the third and fourth pipes.

3. A measuring transformer according to one of the preceding claims,
- wherein the pipe arrangement exhibits a first notional plane of symmetry (yz) located between the first and second pipe and also between the third and fourth pipe,
- and wherein the pipe arrangement is symmetrically identical, at least with regard to the first notional plane of symmetry (yz).

4. A measuring transformer according to the previous claim,
- wherein the first pipe exhibits a smallest distance to the first notional plane of symmetry of the pipe arrangement, which is the same as the smallest distance that the third pipe exhibits to the first notional plane of symmetry of the pipe arrangement; and/or
- wherein the second pipe exhibits a smallest distance to the first notional plane of symmetry of the pipe arrangement, which is the same as the smallest distance that the fourth pipe exhibits to the first notional plane of symmetry of the pipe arrangement; and/or
- wherein each of the first, second, third and fourth pipes runs parallel to the first notional plane of symmetry of the pipe arrangement; and/or
- wherein the pipe arrangement exhibits an imaginary intersecting second notional plane of symmetry (xy) of the pipe arrangement that runs vertically relative to the first notional plane of symmetry of the pipe arrangement, as well as each of the first, second, third and fourth pipes, in particular their respective fourth partial segment, and is symmetrically identical with regard to the second notional plane of symmetry of the pipe arrangement (xy).

5. A measuring transformer according to one of the preceding claims, wherein the pipe arrangement exhibits a first notional connecting axis that imaginarily connects a center point of the first flow opening of the first flow divider and a center point of the first flow opening of the second flow divider with one another, a second notional connecting axis that imaginarily connects a center point of the second flow opening of the first flow divider and a center point of the second flow opening of the second flow divider with one another, a third notional connecting axis that imaginarily connects a center point of the third flow opening of the first flow divider and a center point the of third flow opening of the second flow divider with one another, as well as a fourth notional connecting axis that imaginarily connects a center point of the fourth flow opening of the first flow divider and a center point of the fourth flow opening of the second flow divider with one another; in particular in such a way that each of the notional connecting axes runs parallel to each of the other connecting axes.

6. A measuring transformer according to claims 4 and 5, wherein each of the pipes exhibits a pipe bend height, measured within the second notional plane of symmetry (xy) as a smallest distance of the respective fourth partial segment to the accompanying imaginary connecting notional connecting axis, namely its respective first and second end, wherein the pipe bend height is selected in such a way that each of the pipes exhibits a pipe length-to-pipe bend height ratio, measured as a quotient of the pipe length of the respective pipe to the respective pipe bend height, which is greater than 2 (2:1), in particular greater than 2.5 (2.5:1), and less than 4 (4:1), in particular less than 3 (3:1), and/or that each of the pipes exhibits a caliber-to-pipe bend height ratio, measured as a quotient of the caliber of the respective pipe to the respective pipe bend height, which is greater than 0.1, in particular also less than 0.2.

7. A measuring transformer according to one of the preceding claims,
- wherein the sensor arrangement exhibits one - in particular electrodynamic - first vibration sensor, one - in particular electrodynamic and/or of identical construction as the first vibration sensor - second vibration sensor, one - in particular electrodynamic and/or of identical construction as the first vibration sensor - third vibration sensor, as well as at least one - in particular electrodynamic and/or of identical construction as the third vibration sensor - fourth vibration sensor; and/or
- wherein the exciter arrangement exhibits one, in particular electrodynamic, first vibration exciter, as well as at least one, in particular electrodynamic and/or of identical structure to the first vibration exciter, second vibration exciter.

8. A measuring transformer according to one of the preceding claims, further comprising: one transformer housing that encases the first, second, third and fourth pipes, wherein the transformer housing exhibits at least one, in particular hermetically sealed, cavity and wherein each of the first, second, third and fourth pipes is arranged within said cavity.

9. A measuring transformer according to the previous claim, wherein the transformer housing exhibits one, in particular cylindrical and/or tubular and/or with a hollow cylindrical structure at least in sections, supporting element that stretches from a first end up to a second end with a supporting element length, wherein the first end of the supporting element is connected mechanically to the first flow divider and the second end of the supporting element is connected mechanically to the second flow divider, in particular with an bonded connection.

10. A measuring transformer according to the previous claim, wherein the supporting element exhibits at least one hollow space that is encased by a, in particular metallic, wall and forms a section of the cavity.

11. A measuring transformer according to the previous claim, wherein each of the first, second, third and fourth pipes is arranged only partially within the hollow space of the supporting element, in particular in such a way that each of the second partial segments of each of the first, second, third and fourth pipes is arranged at least predominantly within the hollow space of the supporting element and/or that each of the sixth partial segments of each of the first, second, third and fourth pipes is arranged at least predominantly within the hollow space of the supporting element and/or that each of the third and fifth partial segments of each of the first, second, third and fourth pipes is arranged at least predominantly outside the hollow space of the supporting element.

12. A measuring transformer according to the previous claim,
- wherein the wall of the supporting element exhibits a first opening, as well as at least one second opening that is located at a distance from the first opening along a notional surface line of the wall;
- wherein each of the first and second openings forms a section of the transformer housing's cavity;
- and wherein each of the first, second, third and fourth pipes stretches both through the first opening and through the second opening.

13. A measuring transformer according to the previous claim,
- wherein a respective smallest distance between the first pipe and the third pipe, both inside the first opening and inside the second opening, is smaller than the smallest distance (11-1) between the fourth partial segment (11-3) of the first pipe and the fourth partial segment (13-3) of the third pipe (13); and/or
- wherein a respective smallest distance between the second pipe and the fourth pipe, both inside the first opening and inside the second opening, is smaller than the smallest distance (11-1) between the fourth partial segment (12-3) of the second pipe and the fourth partial segment (14-3) of the fourth pipe (14); and/or
- wherein each of the first, second, third and fourth pipes exhibits a smallest distance to an edge of the first opening and each of the smallest distances to the edge of the first opening is greater than 5 mm and/or less than 10 mm; and/or
- wherein each of the first, second, third and fourth pipes exhibits a smallest distance to an edge of the second opening and each of the smallest distances to the edge of the second opening is greater than 5 mm and/or less than 10 mm.

14. A measuring transformer according to one of the claims 9 to 13, wherein the transformer housing exhibits one, in particular cap-shaped or tubular, encasing element, wherein the encasing element is connected to the supporting element mechanically, in particular with a bonded connection.

15. A measuring transformer according to claim 14,
- wherein the encasing element exhibits one hollow space that is encased by a, in particular metallic, wall and forms a section of the cavity,
- and wherein each of the first, second, third and fourth pipes is arranged only partially within the hollow space of the encasing element, in particular in such a way that each of the fourth partial segments of each of the first, second, third and fourth pipes is arranged exclusively within the hollow space of the encasing element and/or that each of the third and fifth partial segments of each of the first, second, third and fourth pipes is arranged at least predominantly within the hollow space of the encasing element and/or that each of the second and sixth partial segment of each of the first, second, third and fourth pipes is arranged at least predominantly outside the hollow space of the encasing element.

16. A measuring transformer according to claim 14,
- wherein one wall of the encasing element, together with one segment of the wall of the support element, forms a hollow space (200*-2) that encases a section of the cavity,
- and wherein each of the first, second, third and fourth pipes is arranged only partially within the hollow space of the encasing element, in particular in such a way that each of the fourth partial segments of each of the first, second, third and fourth pipes is arranged exclusively within said hollow space (200*-2) and/or that each of the third and fifth partial segments of each of the first, second, third and fourth pipes is arranged at least predominantly within the hollow space (200*-2) and/or that each of the second and sixth partial segments of each of the first, second, third and fourth pipes is arranged at least predominantly outside the hollow space (200*-2).

17. Vibronic measuring system for measuring and/or monitoring at least one, in particular time-variable, flow parameter, in particular a mass flow rate, a volumetric flow rate and/or a flow velocity, and/or for measuring and/or monitoring at least one, in particular time-variable, substance parameter, in particular a density and/or a viscosity, of a flowing fluid, in particular a gas, a liquid or a dispersion, wherein said measuring system encompasses:
- one measuring transformer (MW) according to one of the preceding claims;
- as well as electrically coupled measuring and operating electronics (ME), in particular comprising at least one microprocessor and/or at least one digital signal processor, which are coupled both with the exciter arrangement (30) and with the sensor arrangement (40), in particular by means of electrical connecting lines,
- wherein the measuring and operating electronics are configured to generate the exciter signals (e31, e32) that are used to supply and/or control the measuring transformer; and/or
- wherein the measuring and operating electronics are configured to receive and process vibration signals (s41, s42, s43, s44) that are generated by the measuring transformer (MW), in particular to determine a measured mass flow value representing a mass flow rate, m, of the fluid and/or a substance parameter value representing at least one substance parameter, in particular a measured density value representing a density of the fluid and/or a measured viscosity value representing a viscosity of the fluid.

## Revendications

1. Transducteur destiné à un système de mesure vibronique servant à mesurer au moins une grandeur de mesure, notamment un débit massique et/ou une densité et/ou une viscosité, d'un fluide en écoulement, lequel transducteur comprend :
- un arrangement de tubes
-- avec un premier tube (111) courbé, notamment en forme de V au moins par sections et/ou d'une seule pièce,
-- avec un deuxième tube (121) courbé, de construction identique à celle du premier tube,
-- avec un troisième tube (112) courbé, notamment en forme de V au moins par sections et/ou d'une seule pièce,
-- avec un quatrième tube (122) courbé, de construction identique uniquement à celle du troisième tube,
-- avec un premier diviseur de débit (21), servant notamment de dérivation de conduite et/ou situé côté entrée, lequel diviseur de débit comprend notamment exactement quatre ouvertures d'écoulement,
-- et avec un deuxième diviseur de débit (22), notamment de construction identique au premier diviseur de débit (21) et/ou servant de jonction de conduites, et/ou situé côté sortie, lequel diviseur de débit comprend notamment exactement quatre ouvertures d'écoulement ;
- un dispositif d'excitation destiné à l'excitation et au maintien des vibrations mécaniques de l'arrangement de tubes, à savoir des vibrations de flexion de chacun parmi le premier, le deuxième, le troisième et le quatrième tube autour d'une position de repos respective ;
- ainsi qu'un arrangement de capteurs destiné à la mesure des vibrations mécaniques de l'arrangement de tubes, à savoir des vibrations de flexion de chacun parmi le premier, le deuxième, le troisième et le quatrième tube autour d'une position de repos respective, et lequel arrangement de capteurs est destiné à générer des signaux de mesure de vibrations représentant respectivement des mouvements de vibration d'un ou de plusieurs parmi le premier, le deuxième, le troisième et le quatrième tube ;
- chacun parmi le premier, le deuxième, le troisième et le quatrième tube s'étendant respectivement d'une première extrémité respective du tube respectif jusqu'à une deuxième extrémité respective du même tube, avec une longueur de tube respective, et présentant respectivement un canal intérieur entouré d'une paroi de tube, notamment métallique, lequel canal s'étend respectivement de la première extrémité respective du tube respectif jusqu'à la deuxième extrémité respective du même tube,
-- à la fois la longueur de tube du premier tube et la longueur de tube du deuxième tube étant chacune plus grandes que la longueur de tube du troisième tube et chacune plus grande que la longueur de tube du quatrième tube
-- et chacun des tubes (111, 121, 112, 122) présentant un rapport longueur de tube/calibre respectif, mesuré comme un quotient de la longueur de tube respective par le calibre respectif, lequel rapport est supérieur à 25 (25:1 ) ;
- chacun parmi le premier, le deuxième, le troisième et le quatrième tube étant raccordé respectivement à chacun parmi le premier et le deuxième diviseur de débit de telle sorte que
-- le premier tube débouche par sa première extrémité dans une première ouverture d'écoulement du premier diviseur de débit (21) et par sa deuxième extrémité dans une première ouverture d'écoulement du deuxième diviseur de débit (22),
-- le deuxième tube débouche par sa première extrémité dans une deuxième ouverture d'écoulement du premier diviseur de débit (21) et par sa deuxième extrémité dans une deuxième ouverture d'écoulement du deuxième diviseur de débit (22),
-- le troisième tube débouche par sa première extrémité dans une troisième ouverture d'écoulement du premier diviseur de débit (21) et par sa deuxième extrémité dans une troisième ouverture d'écoulement du deuxième diviseur de débit (22)
-- et le quatrième tube débouche par sa première extrémité dans une quatrième ouverture d'écoulement du premier diviseur de débit (21) et par sa deuxième extrémité dans une quatrième ouverture d'écoulement du deuxième diviseur de débit (22),
- pour lequel chacun parmi le premier, le deuxième, le troisième et le quatrième tube comporte respectivement au moins
-- un premier segment partiel (111-1 - 121-1 - 112-1 ; 122-1) droit, notamment cylindrique creux, relié au premier diviseur de débit, notamment par liaison de matière et/ou de force et/ou de forme,
-- un deuxième segment partiel (111-2 ; 121-2 ; 112-2 - 122-2) en forme d'arc, notamment en forme d'arc de cercle, adjacent au premier segment partiel,
-- un troisième segment partiel (111-3 - 121-3 ; 112-3 ; 122-3) droit, notamment cylindrique creux, adjacent au deuxième segment partiel,
-- un quatrième segment partiel (111-4; 121-4 ; 112-4 ; 122-4) en forme d'arc, notamment en forme d'arc de cercle, adjacent au troisième segment partiel,
-- un cinquième segment partiel (111-5 ; 121-5 ; 112-5 ; 122-5) droit, notamment de conception identique au troisième segment partiel respectif et/ou cylindrique creux, adjacent au quatrième segment partiel ;
-- un sixième segment partiel (111-6; 121-6 ; 112-6 ; 122-6) en forme d'arc, notamment de conception identique au deuxième segment partiel respectif et/ou en forme d'arc de cercle, adjacent au cinquième segment partiel ;
-- ainsi qu'un septième segment partiel (111-7 ; 121-7 ; 112-7 ; 122-7) de construction identique au premier segment partiel et/ou cylindrique creux, adjacent au sixième segment partiel et relié au deuxième diviseur de débit, notamment par liaison de matière et/ou de force et/ou de forme ;
- une distance minimale entre le quatrième segment partiel (111-4) du premier tube et le quatrième segment partiel (112-4) du troisième tube étant à la fois
-- supérieure à une distance minimale (Δ11-2) entre le troisième segment partiel (111-3) du premier tube et le deuxième segment partiel (112-2) du troisième tube et
-- supérieure à une distance minimale (Δ11-3) entre le cinquième segment partiel (11-5) du premier tube et le sixième segment partiel (112-6) du troisième tube ;
- une distance minimale entre le quatrième segment partiel (121-4) du deuxième tube et le quatrième segment partiel (122-4) du quatrième tube étant à la fois
-- supérieure à une distance minimale entre le troisième segment partiel (122-3) du deuxième tube (122) et le deuxième segment partiel (122-2) du quatrième tube et
-- supérieure à une distance minimale entre le cinquième segment partiel (121-5) du deuxième tube et le sixième segment partiel (122-6) du quatrième tube ;
- la plus petite distance entre le quatrième segment partiel (111-4) du premier tube (111) et le quatrième segment partiel (112-4) du troisième tube (112) étant inférieure à une somme d'un calibre du premier tube (111) et d'un calibre du troisième tube (112), et la plus petite distance entre le quatrième segment partiel (121-4) du deuxième tube et le quatrième segment partiel (122-4) du quatrième tube (122) étant inférieure à une somme d'un calibre du deuxième tube (121) et d'un calibre du quatrième tube (122) ;
- un axe longitudinal imaginaire du troisième segment partiel (111-2) du premier tube ainsi qu'un axe longitudinal imaginaire du troisième segment partiel (112-2) du troisième tube, notamment dans une projection sur un premier plan de symétrie imaginaire de l'arrangement de tubes, formant dans le prolongement un premier angle d'intersection (α11-3);
- un axe longitudinal imaginaire du troisième segment partiel (121-2) du deuxième tube et un axe longitudinal imaginaire du troisième segment partiel (122-2) du quatrième tube, notamment dans une projection sur un premier plan de symétrie imaginaire de l'arrangement de tubes, formant dans le prolongement un deuxième angle d'intersection (α12-3) ;
- un axe longitudinal imaginaire du cinquième segment partiel (111-4) du premier tube et un axe longitudinal imaginaire du cinquième segment partiel (112-4) du troisième tube, notamment dans une projection sur un premier plan de symétrie imaginaire de l'arrangement de tubes, formant dans le prolongement un troisième angle d'intersection (α11-5) ;
- et un axe longitudinal imaginaire du cinquième segment partiel (121-4) du deuxième tube et un axe longitudinal imaginaire du cinquième segment partiel (122-4) du quatrième tube, notamment dans une projection sur un premier plan de symétrie imaginaire de l'arrangement de tubes, formant dans le prolongement un quatrième angle d'intersection (α12-5) ;
- et chacun parmi le premier, le deuxième, le troisième et le quatrième angle d'intersection étant respectivement supérieur à 0,1° et inférieur à 10° ;
- le premier angle d'intersection et le deuxième angle d'intersection étant égaux
- et le troisième angle d'intersection et le quatrième angle d'intersection étant égaux.

2. Transducteur selon l'une des revendications précédentes,
- pour lequel la plus petite distance entre le troisième segment partiel (111-3) du premier tube (111) et le deuxième segment partiel (112-2) du troisième tube (112) et la plus petite distance entre le cinquième segment partiel (111-5) du premier tube et le sixième segment partiel (112-6) du troisième tube (112) étant égales et/ou chacune étant inférieure à 50 mm ; et/ou
- la plus petite distance entre le troisième segment partiel (121-3) du deuxième tube (121) et le deuxième segment partiel (122-2) du quatrième tube (122) et la plus petite distance entre le cinquième segment partiel (121-5) du deuxième tube (121) et le sixième segment partiel (122-6) du quatrième tube (122) étant égales et/ou chacune étant inférieure à 50 mm ; et/ou
- la plus petite distance entre le quatrième segment partiel (111-4) du premier tube (111) et le quatrième segment partiel (112-4) du troisième tube (112) étant inférieure à 10 fois la plus petite distance entre le troisième segment partiel (111-3) du premier tube (111) et le deuxième segment partiel (112-2) du troisième tube (112) ; et/ou
- la plus petite distance entre le quatrième segment partiel (111-4) du premier tube et le quatrième segment partiel (112-4) du troisième tube étant inférieure à 10 fois la plus petite distance entre le cinquième segment partiel (111-5) du premier tube (111) et le sixième segment partiel (112-6) du troisième tube ; et/ou
- chacun parmi le premier, le deuxième, le troisième et le quatrième tube présentant respectivement un premier plan de symétrie imaginaire ainsi qu'un deuxième plan de symétrie imaginaire perpendiculaire à celui-ci, et chacun parmi le premier, le deuxième, le troisième et le quatrième tube étant respectivement symétrique par rapport au premier plan de symétrie associé ainsi qu'au deuxième plan de symétrie associé ; et/ou
- le troisième et le cinquième segments partiels droits du premier et du deuxième tube n'étant pas parallèles au troisième et au cinquième segments partiels droits du troisième et du quatrième tube.

3. Transducteur selon l'une des revendications précédentes,
- pour lequel l'arrangement de tubes présente un premier plan de symétrie imaginaire (yz) situé à la fois entre le premier et le deuxième tube et entre le troisième et le quatrième tube,
- et l'arrangement de tubes présentant une symétrie spéculaire par rapport au moins au premier plan de symétrie imaginaire (yz).

4. Transducteur selon la revendication précédente,
- pour lequel le premier tube présente, par rapport au premier plan de symétrie imaginaire de l'arrangement de tubes, une distance minimale qui est égale à une distance minimale que présente le troisième tube par rapport au premier plan de symétrie imaginaire de l'arrangement de tubes ; et/ou
- pour lequel le deuxième tube présente, par rapport au premier plan de symétrie imaginaire de l'arrangement de tubes, une distance minimale qui est égale à une distance minimale que présente le quatrième tube par rapport au premier plan de symétrie imaginaire de l'arrangement de tubes ; et/ou
- chacun parmi le premier, le deuxième, le troisième et le quatrième tube étant parallèle au premier plan de symétrie imaginaire de l'arrangement de tubes ; et/ou
- l'arrangement de tubes présentant un deuxième plan de symétrie imaginaire (xy) de l'arrangement de tubes, lequel deuxième plan est perpendiculaire au premier plan de symétrie imaginaire de l'arrangement de tubes et coupant néanmoins de manière imaginaire chacun parmi le premier, le deuxième, le troisième et le quatrième tube, notamment leur quatrième segment partiel respectif, et présentant une symétrie spéculaire par rapport au deuxième plan de symétrie imaginaire de l'arrangement de tubes (xy).

5. Transducteur selon l'une des revendications précédentes, pour lequel l'arrangement de tubes comprend un premier axe de liaison imaginaire reliant de manière imaginaire un centre de la première ouverture d'écoulement du premier diviseur de débit et un centre de la première ouverture d'écoulement du deuxième diviseur de débit, un deuxième axe de liaison imaginaire reliant de manière imaginaire un centre de la deuxième ouverture d'écoulement du premier diviseur de débit et un centre de la deuxième ouverture d'écoulement du deuxième diviseur de débit, un troisième axe de liaison imaginaire qui relie de manière imaginaire un centre de la troisième ouverture d'écoulement du premier diviseur de débit et un centre de la troisième ouverture d'écoulement du deuxième diviseur de débit, ainsi qu'un quatrième axe de liaison imaginaire qui relie de manière imaginaire un centre de la quatrième ouverture d'écoulement du premier diviseur de débit et un centre de la quatrième ouverture d'écoulement du deuxième diviseur de débit ; notamment de telle sorte que chaque axe de liaison imaginaire soit parallèle à chacun des autres axes de liaison.

6. Transducteur selon la revendication 4 et 5, pour lequel chacun des tubes présente respectivement une hauteur de coude, mesurée à l'intérieur du deuxième plan de symétrie imaginaire (xy) en tant que plus petite distance du quatrième segment partiel respectif par rapport à l'axe de liaison imaginaire associé, à savoir reliant de manière imaginaire sa première et sa deuxième extrémité respective, laquelle hauteur de coude est choisie de telle sorte que chacun des tubes présente respectivement un rapport longueur de tube/hauteur de coude, mesuré en tant que quotient de la longueur du tube respectif par la hauteur de coude respective, qui est supérieur à 2 (2:1),notamment supérieur à 2,5 (2,5:1), et inférieur à 4 (4:1), notamment inférieur à 3 (3:1), et/ou en ce que chacun des tubes présente respectivement un rapport calibre/hauteur de coude, mesuré comme un quotient du calibre du tube respectif par la hauteur de coude respective, qui est supérieur à 0,1, notamment également inférieur à 0,2.

7. Transducteur selon l'une des revendications précédentes,
- pour lequel l'arrangement de capteurs présente un premier capteur de vibrations - notamment électrodynamique -, un deuxième capteur de vibrations - notamment électrodynamique et/ou identique au premier capteur de vibrations -, un troisième capteur de vibrations - notamment électrodynamique et/ou identique au premier capteur de vibrations - ainsi qu'au moins un quatrième capteur de vibrations - notamment électrodynamique et/ou identique au troisième capteur de vibrations - ; et/ou
- pour lequel le dispositif d'excitation présente un premier excitateur de vibrations, notamment électrodynamique, ainsi qu'au moins un deuxième excitateur de vibrations, notamment électrodynamique et/ou identique au premier excitateur de vibrations.

8. Transducteur selon l'une des revendications précédentes, comprenant en outre : un boîtier de transducteur enveloppant le premier, le deuxième, le troisième et le quatrième tube, le boîtier de transducteur présentant au moins une cavité, notamment fermée hermétiquement, et chacun parmi le premier, le deuxième, le troisième et le quatrième tube étant disposé à l'intérieur de la même cavité.

9. Transducteur selon la revendication précédente, pour lequel le boîtier de transducteur présente un élément de support, notamment cylindrique et/ou tubulaire et/ou au moins partiellement cylindrique creux, lequel élément s'étend d'une première extrémité jusqu'à une deuxième extrémité avec une longueur d'élément de support, l'élément de support étant relié mécaniquement, notamment par liaison de matière, à sa première extrémité au premier diviseur de débit et à sa deuxième extrémité au deuxième diviseur de débit.

10. Transducteur selon la revendication précédente, pour lequel l'élément de support présente au moins une cavité enveloppée par une paroi, notamment métallique, laquelle paroi forme une zone partielle de la cavité.

11. Transducteur selon la revendication précédente, pour lequel chacun parmi le premier, le deuxième, le troisième et le quatrième tube est disposé seulement partiellement à l'intérieur de l'espace creux de l'élément de support, notamment de telle sorte que chacun parmi les deuxièmes segments partiels de chacun parmi le premier, le deuxième, le troisième et le quatrième tube est disposé au moins principalement à l'intérieur de l'espace creux de l'élément de support et/ou que chacun parmi les sixièmes segments partiels de chacun parmi le premier, le deuxième, le troisième et le quatrième tube est disposé au moins principalement à l'intérieur de l'espace creux de l'élément de support et/ou que chacun parmi les troisièmes et cinquièmes segments partiels de chacun parmi le premier, le deuxième, le troisième et le quatrième tube est disposé au moins principalement en dehors de l'espace creux de l'élément de support.

12. Transducteur selon la revendication précédente,
- pour lequel la paroi de l'élément de support présente une première ouverture ainsi qu'au moins une deuxième ouverture espacée de la première ouverture le long d'une génératrice imaginaire de la paroi ;
- chacune parmi les premières et deuxièmes ouvertures formant respectivement une partie de la cavité du boîtier de transducteur ;
- et chacun parmi le premier, le deuxième, le troisième et le quatrième tube s'étendant respectivement à la fois à travers la première ouverture et à travers la deuxième ouverture.

13. Transducteur selon la revendication précédente,
- pour lequel, aussi bien à l'intérieur de la première ouverture qu'à l'intérieur de la deuxième ouverture, une distance minimale respective entre le premier tube et le troisième tube est respectivement plus petite que la distance minimale (11-1) entre le quatrième segment partiel (11-3) du premier tube et le quatrième segment partiel (13-3) du troisième tube (13) ; et/ou
- pour lequel, aussi bien à l'intérieur de la première ouverture qu'à l'intérieur de la deuxième ouverture, une distance minimale respective entre le deuxième tube et le quatrième tube est respectivement plus petite que la distance minimale (11-1) entre le quatrième segment partiel (12-3) du deuxième tube et le quatrième segment partiel (14-3) du quatrième tube (14) ; et/ou
- chacun parmi le premier, le deuxième, le troisième et le quatrième tube présentant une distance minimale par rapport à un bord de la première ouverture, et chacune parmi les distances minimales par rapport au bord de la première ouverture étant supérieure à 5 mm et/ou inférieure à 10 mm ; et/ou
- chacun parmi le premier, le deuxième, le troisième et le quatrième tube présentant une distance minimale par rapport à un bord de la deuxième ouverture, et chacune parmi les distances minimales par rapport au bord de la deuxième ouverture étant supérieure à 5 mm et/ou inférieure à 10 mm.

14. Transducteur selon l'une des revendications 9 à 13, pour lequel le boîtier de transducteur présente un élément d'enveloppe, notamment en forme de capuchon ou de tube, l'élément d'enveloppe étant relié mécaniquement, notamment par liaison de matière, à l'élément de support.

15. Transducteur selon la revendication 14,
- pour lequel l'élément d'enveloppe comprend un espace creux entouré d'une paroi, notamment métallique, formant une zone partielle de la cavité,
- et pour lequel chacun parmi le premier, le deuxième, le troisième et le quatrième tube est disposé seulement partiellement à l'intérieur de l'espace creux de l'élément d'enveloppe, notamment de telle sorte que chacun parmi les quatrièmes segments partiels de chacun parmi le premier, le deuxième, le troisième et le quatrième tube est disposé exclusivement à l'intérieur de l'espace creux de l'élément d'enveloppe et/ou que chacun parmi les troisièmes et cinquièmes segments partiels de chacun parmi le premier, le deuxième, le troisième et le quatrième tube est disposé au moins principalement à l'intérieur de l'espace creux de l'élément d'enveloppe et/ou que chacun parmi les deuxièmes et sixièmes segments partiels de chacun parmi le premier, le deuxième, le troisième et le quatrième tube est disposé au moins principalement à l'extérieur de l'espace creux de l'élément d'enveloppe.

16. Transducteur selon la revendication 14,
- pour lequel une paroi de l'élément d'enveloppe, conjointement avec un segment de la paroi de l'élément de support, enveloppe un espace creux (200*-2) formant une partie de la cavité,
- et pour lequel chacun parmi le premier, le deuxième, le troisième et le quatrième tube est disposé seulement partiellement à l'intérieur de l'espace creux de l'élément d'enveloppe, notamment de telle sorte que chacun parmi les quatrièmes segments partiels de chacun parmi le premier, le deuxième, le troisième et le quatrième tube est disposé exclusivement à l'intérieur de l'espace creux (200*-2) et/ou que chacun parmi les troisièmes et cinquièmes segments partiels de chacun parmi le premier, le deuxième, le troisième et le quatrième tube est disposé au moins principalement à l'intérieur de l'espace creux (200*-2) et/ou que chacun parmi les deuxièmes et sixièmes segments partiels de chacun parmi le premier, le deuxième, le troisième et le quatrième tube est disposé au moins principalement à l'extérieur de l'espace creux (200*-2).

17. Système de mesure vibronique destiné à la mesure et/ou à la surveillance d'au moins un paramètre d'écoulement, notamment variable dans le temps, notamment un débit massique, un débit volumique et/ou une vitesse d'écoulement, et/ou destiné à la mesure et/ou à la surveillance d'au moins un paramètre de matière, notamment variable dans le temps, notamment une densité et/ou une viscosité, d'un fluide en écoulement, notamment un gaz, un liquide ou une dispersion, lequel système de mesure comprend :
- un transducteur (MW) selon l'une des revendications précédentes ;
- ainsi qu'une électronique de mesure et d'exploitation (ME) couplée électriquement aussi bien à son dispositif d'excitation (30) qu'à son arrangement de capteurs (40), notamment au moyen de lignes de liaison électriques, laquelle électronique est notamment constituée d'au moins un microprocesseur et/ou d'au moins un processeur de signaux numériques,
- l'électronique de mesure et d'exploitation étant conçue pour générer des signaux d'excitation (e31, e32) alimentant et/ou commandant le transducteur de mesure ; et/ou
- l'électronique de mesure et d'exploitation étant conçue pour recevoir et traiter des signaux de vibration (s41, s42, s43, s44) générés au moyen du transducteur de mesure (MW), notamment à savoir une valeur mesurée de débit massique représentant un débit massique, m, du fluide, et/ou une valeur de paramètre de matière représentant l'au moins un paramètre de matière, notamment une valeur mesurée de densité représentant une densité du fluide et/ou une valeur mesurée de viscosité représentant une viscosité du fluide.
